# EUROPEAN PATENT SPECIFICATION

(11) **EP 0 806 640 B1**
(45) Date of publication and mention of the grant of the patent: **28.05.2003**
(21) Application number: 97105107.3
(22) Date of filing: 26.03.1997
(51) Int. Cl.: G01J 5/04

(54) **Apparatus for measuring temperature of molten metal**
Vorrichtung zum Messen der Temperatur von geschmolzenem Metall
Dispositif de mesure de la température d'un métal fondu

(30) Priority: 09.04.1996 JP 11198696; 09.04.1996 JP 11198796; 09.04.1996 JP 11198896; 10.04.1996 JP 11212296; 10.04.1996 JP 11212396
(43) Date of publication of application: 12.11.1997
(73) Proprietor: NKK CORPORATION, Tokyo 100 (JP)
(72) Inventor: Wakai, Hajime, c/o Intellectual Property Dept., Kawasaki-ku, Kawasaki 210 (JP); Yamanaka, Zenkichi, c/o Intellectual Prop. Dept., Kawasaki-ku, Kawasaki 210 (JP); Sakai, Atsushi, c/o Intellectual Property Dept., Kawasaki-ku, Kawasaki 210 (JP); Wakita, Shigeru, Kawasaki-ku, Kawasaki 210 (JP); Yamada, Yoshiro, Kawasaki-ku, Kawasaki 210 (JP); Kaihara, Akinori, Fukuyama 721 (JP); Matsubayashi, Akira, Fukuyama 721 (JP)
(74) Representative: Füchsle, Klaus, Dipl.-Ing.

(56) References cited:
- EP-A- 0 646 778
- EP-A- 0 655 613

## Description

### BACKGROUND OF THE INVENTION

### 1. Field of the Invention

The present invention relates to an apparatus for measuring a temperature of molten metal.

### 2. Description of the Related Arts

Blast furnace produces hot metal by charging iron ores, coke, and fluxes such as lime to the blast furnace, by combusting the coke with hot air blown from a lower part of the blast furnace, and by reducing the iron ores with generated heat and reducing gas. The hot metal is discharged with slag through a tapping hole arranged at a lower part of the blast furnace, which discharging operation is generally called "tapping". Since the burden in the blast furnace descends along the progress of coke combustion, the raw materials and fluxes are charged from upper part of the blast furnace to maintain an adequate burden level therein.

During the operation of blast furnace, stable operation is emphasized while maintaining various kinds of balances including material balance and heat balance. In particular, the heat level within a blast furnace reflects the infurnace conditions such as the reaction state in the furnace and affects the consumption of coke and other materials. Accordingly, precise monitoring of heat level in the blast furnace is critical for early detection of change of infurnace conditions and for reducing the raw material cost.

Since the heat level in a blast furnace depends significantly on the temperature of produced hot metal, precise determination of the hot metal temperature is required. Prior arts for measuring the hot metal temperature in a blast furnace are as follows.
(a) Immersion thermocouple: Hot metal discharged from the tapping hole enters a slag-removing unit called "skimmer" via a hot metal trough to remove the slag by floating it on the hot metal. A throwaway immersion thermocouple is applied to measure the temperature of the hot metal held in the skimmer.
(b) Thermocouple with protective tube: Similar with the immersion thermocouple described above, a thermocouple inserted into a refractory protective tube is used to measure the temperature of the hot metal held in the skimmer.
(c) Radiation thermometer with protective tube: The technology is disclosed in unexamined Japanese patent publication No. 4-348236. According to the patent publication, a refractory protective tube that has a small hole at the tip thereof is immersed into the hot metal while purging the inside of the protective tube with an inert gas. The radiation temperature of the hot metal present at the small hole is measured by the radiation thermometer. The reason that the internal temperature of the hot metal is not determined is that the surface portion of the hot metal gives different temperature from that of internal portion of the hot metal owing to the fluctuation of emissivity resulted from the presence of foreign substances which emit heat to ambient air and from the irregularity of surface oxidization state.
(d) Optical fiber thermometer: The technology is disclosed in unexamined Japanese patent publication No. 4- 329323. According to the patent publication, an optical fiber that has a durability close to the durability of a thermocouple is immersed into high temperature melt such as hot metal to measure the light coming through the optical fiber using a radiation thermometer mounted at the far end of the optical fiber. EP-A-646 778 discloses an apparatus for measuring temperature using optical fiber.

All the prior arts described above use apparatuses to determine the temperature at a place such as skimmer which holds hot metal. The hot metal in a skimmer, however, requires 40 - 60 minutes after the beginning of tapping of hot melt until it reaches a stable temperature because the hot melt trough and the skimmer absorb a large amount of heat from the hot metal before they become a stable state. Consequently, all the prior arts described above raise a problem which is that the hot melt during the period before reaching a stable state shows a significantly low temperature.

To solve the problem, determination of the temperature of hot metal may be conducted at the discharge point thereof from the tapping hole. However, the rate of discharging hot metal through the tapping hole is in a range of from 5 to 10 tons min. which corresponds to a flow speed ranging approximately from 7 to 14 m / sec. For measuring the temperature of hot metal which discharges at such a high speed, the prior arts induce problems described below.
(a) Immersion thermocouple: The technology fails to continuously measure temperature because the measuring junction of the thermocouple is melted out within several seconds when it is immersed into hot metal. Also in the case of intermittent temperature measurement, the thermocouple is needed to be replaced in every measurement cycle, which degrades the working efficiency.
(b) Thermocouple with protective tube: The technology is able to continuously measure temperature while keeping the protective tube immersed into hot metal. However, the durability of the refractory is a problem, and repeated cycles of immersion of the refractory into the hot metal readily induces cracks thereon. Particularly when the refractory protective tube is immersed into a jet of molten metal such as hot metal, erosion of the protective tube becomes severe and likely induces tube break to damage the thermocouple. When the thickness of the protective tube is increased to improve the mechanical strength thereof, a temperature difference occurs between the inside and the outside of the protective tube, which disables the measurement of hot metal temperature.
(c) Radiation thermometer with protective tube: The technology has a difficulty in adjusting the pressure of purge gas inside of the refractory protective tube. Slight reduction of the gas pressure allows the hot metal to enter from the small hole at the tip of the protective tube, and slight increase of the pressure increases the injection volume of gas to cool the surface of the hot metal and to decrease the surface temperature lower to that one of the inside portion of the hot metal. Since the flow speed of molten metal always fluctuates at a large extent inside of the jet stream of the molten metal such as hot metal, the pressure at the small hole at tip of the protective tube also significantly fluctuates. Accordingly, the purge gas pressure inside of the protective tube has difficulty in following the pressure fluctuation of the molten metal, which unavoidably results in excess gas injection and the hot metal invasion.
(d) Optical fiber thermometer: The technology consists in inserting an optical fiber into a hot metal which shows a calm movement. So the technology is unable to apply to a jet of molten metal such as hot metal. Even when an optical fiber is inserted into a jet of molten metal such as hot metal, the optical fiber is expelled. If a thick quartz glass rod having larger size than that of the base lead of optical fiber is applied, it can be inserted into the jet. In that case, however, the quartz glass rod breaks under a dynamic pressure of the jet.

That is, the prior arts have shown difficulties in inserting thermometer into the jet of a molten metal such as hot metal that flows out at a high speed and large volume, and cannot determine the inside temperature of jet of molten metal. In addition, molten metal is often accompanied with harmful gases and fumes therearound. These conditions raise problems in terms of work environment and of safety, as well as the high temperature environment of temperature-measuring state.

### SUMMARY OF THE INVENTION

It is an object of the present invention to provide an apparatus for measuring temperature of molten metal, wherein the temperature of molten metal flow is continuously determined and the environment and the safety of measuring performance are improved.

To achieve the object, the present invention provides an apparatus for measuring temperature of molten metal, which comprises all the technical features recited in claim 1. Additional embodiments are defined in dependent claims.

The metal tube covered optical fiber is connected with the radiation thermometer. The guide means has a tip part, and the guided optical fiber is introduced into the molten metal through the tip part. The transfer means is attached to the guide means.

The apparatus for measuring temperature may further comprise a feed passage between the bobbin and the feed means. The feed passage preferably comprises a straight part and a bend part both comprising a coil spring. The coil spring comprises an inner coil spring and an outer coil spring which is located at outer periphery of the inner coil spring. The wire of the inner coil spring has a thinner size than that of the outer coil spring. The guide means of the apparatus for measuring temperature preferably has a bend part comprising a coil spring.

The feed means for feeding the optical fiber into the molten metal preferably comprises a pair of endless belts and rolls to drive the endless belts. The pair of endless belts are arranged in parallel so that an outer face of each of the endless belts contacts each other. The endless belt is made of a resin. The endless belt has a plurality of lateral grooves and of lateral ribs on the outer peripheral face thereeach, and a longitudinal groove in longitudinal direction to connect the lateral grooves each other. In addition, each of the endless belts has a plurality of lateral grooves and lateral ribs on inside face thereof. Each of the rolls has lateral grooves so that the lateral grooves on the roll mate the lateral ribs on the endless belt. The feed means has a press device which presses the pair of endless belt by each other so that the lateral grooves and the lateral ribs are engaged together for enhancing further tight fitting of the optical fiber and the endless belts.

According to the apparatus for measuring temperature, the tip part of the guide means comprises an inner cylinder for passing the optical fiber therethrough, nozzles for injecting the primary coolant into the inner cylinder, a tip opening, a middle cylinder and an outer cylinder, a charge opening that introduces the secondary coolant, and a discharge opening that discharges the charged coolant. The tip opening has a larger diameter than that of optical fiber to discharge the primary coolant. The middle cylinder and the outer cylinder are arranged concentrically on outer periphery of the inner cylinder. The charge opening receives the coolant between the inner cylinder and the middle cylinder and between the middle cylinder and the outer cylinder. The discharge opening discharges the charged coolant.

According to the apparatus for measuring temperature, the transfer means for moving the tip of the guide means to the position for measuring temperature preferably comprises a guide drive device, a laser distance measuring device, a laser drive device, computing means, and a control device. The guide drive unit drives the tip part. The laser distance measuring device measures the distance from the molten metal jet. The laser drive device changes the direction of measurement by driving the laser distance measuring device. The computing means computes the center position of molten metal jet and the distance from the center position of the molten metal jet based on the distance data acquired by the laser distance measuring device. The control device drives the tip part by controlling the guide drive device, and adjusts the position for feeding the optical fiber into the molten metal jet.

According to the apparatus for measuring temperature, the store means preferably comprises a looper device for storing the optical fiber fed from the bobbin and for feeding the metal tube covered optical fiber to the feed passage. The looper device is located between the bobbin and the feed passage. The optical fiber thus fed from the feed passage is held on the looper device, then sent to the feed passage. The feeder feeds the optical fiber which fed from the feed passage into the molten metal. The looper device comprises a looper body in a circular arc shape to store the optical fiber, and a looper drive device that prevents the optical fiber from slackened to induce mis-routing by extending/contracting the looper body.

### BRIEF DESCRIPTION OF THE DRAWINGS

Fig. 1 is a schematic drawing of an apparatus for measuring temperature according to the present invention.

Fig. 2 is a graph showing effect of feed speed of the optical fiber on the observed temperature using an apparatus for measuring temperature of the present invention.

Fig. 3 is a graph showing the relation between the time after the start of tapping and the observed temperature when an apparatus for measuring temperature of the present invention is applied to the measurement of hot metal temperature.

Fig. 4 is a longitudinal cross sectional view of a flexible optical fiber guide tube which is used in an apparatus for measuring temperature of to the present invention.

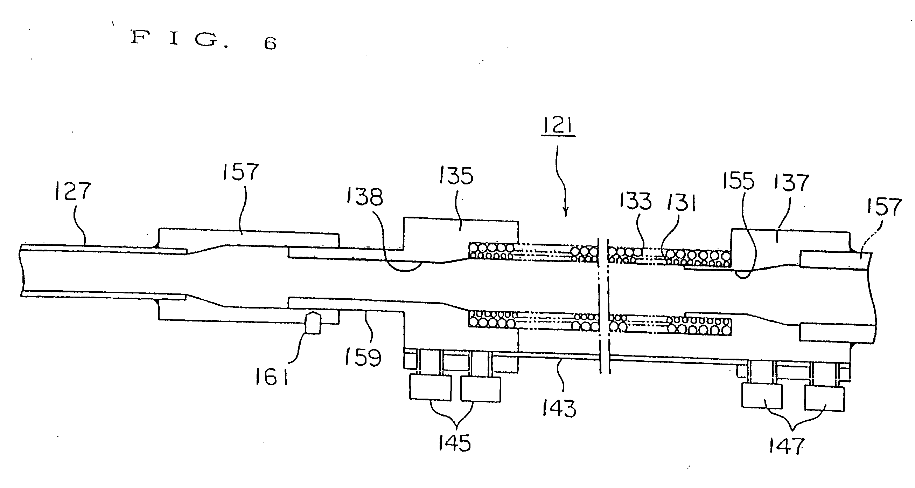

Fig. 5 illustrates the function of optical fiber guide tube of Fig. 4 applied to a bend part.

Fig. 6 is a longitudinal cross sectional view of another flexible optical fiber guide tube which is used in an apparatus for measuring temperature of the present invention.

Fig. 7 is a schematic view of an apparatus for measuring temperature according to the present invention where a flexible optical fiber guide tube is applied.

Fig. 8 is a schematic view of an optical fiber feed means using endless belts, which is used in an apparatus for measuring temperature according to the present invention.

Fig. 9 is an enlarged view of the optical fiber feed means of Fig. 8 on the drive roll side.

Fig. 10(A) is a part-enlarged view of the endless belts of Fig. 9 under mating state.

Fig. 10(B) is a sectional view taken on line B-B of Fig. 10(A).

Fig. 11(A) is a graph showing a result of temperature measurement in the apparatus for measuring temperature of Fig. 1.

Fig. 11(B) is a graph showing a result of temperature measurement in the apparatus for measuring temperature using an optical fiber feed unit using endless belts.

Fig. 12(A) shows a change in feed speed of optical fiber during the measurement with the apparatus for measuring temperature of Fig. 1.

Fig. 12(B) shows a change in feed speed of optical fiber in the apparatus for measuring temperature using an optical fiber feed unit using endless belts.

Fig. 13 is a schematic view of an apparatus for measuring temperature where an optical fiber feed means of Fig. 8 is applied.

Fig. 14(A) is a longitudinal cross sectional view at the tip part of the optical fiber tip guide device which is used in an apparatus for measuring temperature according to the present invention.

Fig. 14(B) is a longitudinal cross sectional view near the base part of the optical fiber tip guide device which is used in an apparatus for measuring temperature according to the present invention.

Fig. 15(A) is a cross sectional view of a packing used in an optical fiber tip guide unit.

Fig. 15(B) shows a connection/disconnection mechanism of an optical fiber tip guide unit.

Fig. 15(C) is a lateral cross sectional view of an optical fiber tip guide unit.

Fig. 16 is an appearance of an optical fiber tip guide unit used in an apparatus for measuring temperature according to the present invention.

Fig. 17 is a graph showing the change in optical fiber temperature observed by an apparatus for measuring temperature using an optical fiber tip guide.

Fig. 18 is a schematic view of an apparatus for measuring temperature according to the present invention where an optical fiber tip guide unit is applied.

Fig. 19 is a schematic view of a positioning unit for optical fiber tip used in an apparatus for measuring temperature according to the present invention.

Fig. 20 is a graph showing the distribution of observed data of distance from the surface of hot metal jet determined by a laser distance measuring device of Fig. 19.

Fig. 21 illustrates the position for feeding an optical fiber.

Fig. 22 is a graph showing a temperature measurement result determined by an apparatus for measuring temperature using the optical fiber tip positioning unit.

Fig. 23 is a schematic view of an apparatus for measuring temperature according to the present invention using an optical fiber positioning unit.

Fig. 24 is a schematic drawing of an apparatus for measuring temperature according to the present invention using an optical fiber looper unit.

Fig. 25(A) is a graph showing a result of temperature measurement using the apparatus for measuring temperature in Fig. 1.

Fig. 25(B) is a graph shown a result of temperature measurement determined by an apparatus for measuring temperature according to the present invention using an optical fiber looper unit.

Fig. 26 is a schematic drawing of an apparatus for measuring temperature according to the present invention.

Fig. 27(A) is a graph showing a result of temperature measurement without using an outer cylinder.

Fig. 27(B) is a graph showing a result of temperature measurement applying an outer cylinder.

Fig. 28 is a drawing illustrating the state that a metal tube covered optical fiber thermometer is immersed into the tapping hole where the hot metal ejects therefrom.

Fig. 29 is a graph showing the relation between the optical fiber feed speed and the moment inertia of area according to the present invention.

Fig. 30 is a graph showing the relation between the optical fiber feed speed and the distance between the tip of optical fiber and the hot metal according to the present invention.

### DESCRIPTION OF THE EMBODIMENT

### EMBODIMENT I

The apparatus for measuring temperature of molten metal comprises: (a) a radiation thermometer, (b) a metal tube covered optical fiber; (c) a bobbin coiled with the metal tube covered optical fiber therearound; (d) feed means for feeding the optical fiber coiled around the bobbin into the molten metal; (e) guide means for guiding the fed optical fiber; and (f) transfer means for moving a tip part of the guide means to a place for measuring temperature of the molten metal.

The metal tube covered optical fiber is connected to the radiation thermometer. The guide means has the tip part, and the metal tube covered optical fiber which was guided enters the molten metal through the tip of the guide means. The transfer means is attached to the guide means.

The radiation thermometer is the one commonly used for an optical fiber thermometer to determine the temperature based on the light energy and wave length distribution of light sent from the optical fiber. The optical fiber according to the present invention is covered with a metal tube, and the feed mechanism feeds the optical fiber at a specified speed.

The optical fiber which is fed from the feed mechanism is led to the measuring object by the guide means. The guide means is necessary for separating the radiation thermometer and the feed mechanism from the measuring object to protect the radiation thermometer from heat radiation and fume of the molten metal. The guide means is provided with a drive unit to move the tip of the guide part to a place near the jet of molten metal during the measuring period.

The optical fiber fed from the tip of the guide means is covered with a metal so that the optical fiber has rigidity. Accordingly, the optical fiber is inserted into the molten metal without expelled from the jet. When the optical fiber is inserted into the molten metal to some length, the metal cover on the optical fiber melts. When the metal cover melts, the jet flow of the molten metal breaks the base lead such as quartz glass of optical fiber, and the broken part becomes the edge of the optical fiber. The light which is emitted from the molten metal at periphery of the edge part enters the optical fiber at its edge, then the light is introduced to the radiation thermometer. The temperature measurement is conducted in the radiation thermometer.

The feed mechanism is necessary to set the feed speed at a specified value or more. Since the feed mechanism assures the insertion of the optical fiber deep into the molten metal without melting the metal tube cover on the optical fiber at the outside of the molten metal or in the surface layer thereof, so the temperature inside of the molten metal is measured.

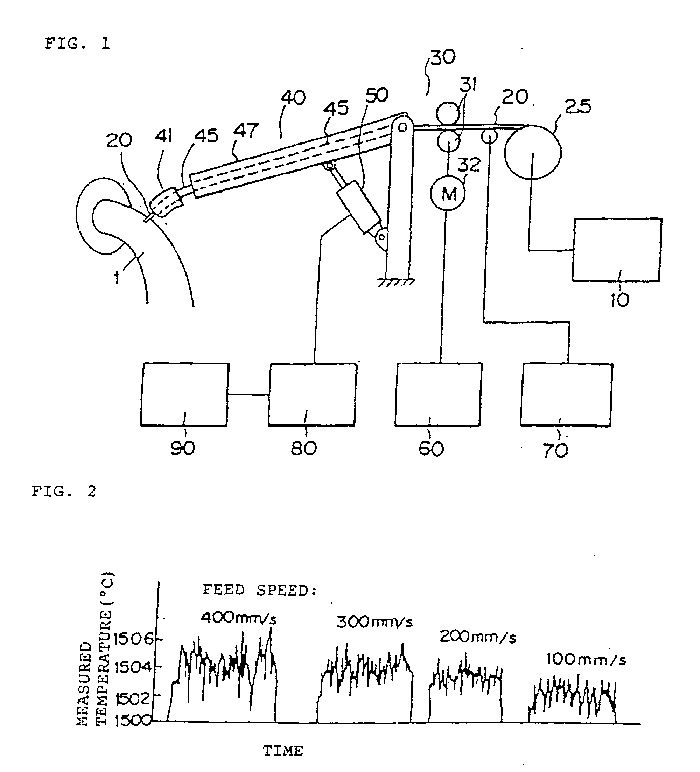

Fig. 1 shows an embodiment of the present invention. The reference numeral 1 is the jet of molten metal, the numeral 10 is the radiation thermometer, the numeral 20 is the optical fiber covered with a metal tube, the numeral 25 is the rotary drum, the numeral 30 is the feed mechanism, the numeral 31 is the pinch roll, the numeral 32 is the motor, the numeral 40 is the guide means, the numeral 41 is the tip of the guide means, the numeral 45 is the guide pipe, the numeral 47 is the support frame, the numeral 50 is the drive device, the numeral 60 is the control device for feed speed, the numeral 70 is the feed speed detector, the numeral 80 is the drive control device, and the numeral 90 is the object detection device.

The metal tube covered optical fiber is coiled around the rotary drum 25, as in the case of common optical fibers. The starting part of the coiled metal tube covered optical fiber 20 is connected optically to the optical fiber on stationary side using a rotary optical connector to enable the temperature measurement all through the period of rotation of the rotary drum 25. The base lead of optical fiber 20 is made by quartz glass having 50 µm of diameter, and the covering tube is made of stainless steel having 3.2 mm of outer diameter and 0.2 mm of thickness. There is no special limitation on the diameter of base lead. As for the diameter of covering tube, too thick covering tube raises difficulty to pass through the guide pipe 45, and too thin covering tube likely induces buckling, which hinders smooth feeding. The metal tube covered optical fiber can further comprise an outer metal tube. The metal tube covered optical fiber is inserted into the outer metal tube. The feed mechanism 30 pinches the metal tube covered optical fiber 20 using the pitch rolls 31, 31, and feeds the metal tube covered optical fiber 20 by rotating the pinch rolls by the motor 32 at a specified feed speed. The feed speed in the embodiment is variable in a range of from 0 to 600 mm/sec. According to the embodiment, the feed mechanism 30 is provided with a speed control device 60 for controlling the feed speed and a feed speed detector 70 to maintain the feed speed at a specified value. The detector 70 and the speed control unit 60 may be omitted if an adequate feed speed is maintained.

The guide means 40 comprises a guide pipe 45 for passing the metal tube covered optical fiber 20 therethrough and a support frame 47. The support frame 47 reinforces the mechanical strength of the guide pipe 45. The guide pipe 45 in the embodiment is made of stainless steel with 5 mm of inner diameter.

Through the inner part of the guide pipe 45, a purge gas flows also for cooling the pipe. A seal may be located at the inlet of the guide pipe to minimize the purge gas leak. If, however, perfect sealing of the inlet of the guide pipe with, for example, an O-ring, the optical fiber suffers resistance against the feeding thereof. Therefore, the sealing means is selected on the balance with the supply volume of purge gas. Common practice is to apply a mouth ring which has an opening that allows the metal tube covered optical fiber 20 to pass therethrough without resistance or to apply a contraction of the opening by drawing the guide pipe to that degree, which practices are sufficient for practical use, though there appears leak to some extent.

The tip part 41 of the guide means 40 is protected by a cover of refractory to prevent the guide pipe 45 from melt caused by droplets of the molten metal. According to the embodiment, the refractory is made of magnesia group. Regarding the inner diameter of the tip part 41 of the guide means, smaller diameter requires less purge gas consumption, and less temperature reduction of the molten metal at around the part. Accordingly, smaller inner diameter of the tip part 41 is preferred also from the point of precision for measuring temperature.

According to the embodiment, the drive device 50 mounted to the guide part 40 has a structure that the electric-drive cylinder is attached to the support frame 47 of the guide part 40. The power source of the drive device 50 includes hydraulic, motor, and other types which generate power. According to the embodiment, the whole guide part 40 makes a rolling movement inclined around the horizontal axis. The movement may be combined with vertical and horizontal motions depending on the object. In the embodiment, a separate work machine such as a mud gun conducts a open/close work of the tapping hole on arriving at a position for measuring the temperature of hot metal. Therefore, a retreat position of the drive device 50 is selected at an upper part to avoid the collision to the work machine.

The drive control device 80 is a microcomputer to control the drive device 50 of the guide means 40, thus moving the tip part 41 of the guide part near to the measuring object. When a signal is generated from the operation panel of the mud gun to start the work or when a signal is generated from the object detection device 90 to notify the approach of work machine such as mud gun, the drive control device 80 controls the drive device 50 for retreating the guide means 40.

According to the embodiment, when the work machine comes close, the drive control device 80 operates the electric cylinder rod to extend thereof. The operation is programmed to make less movement of the electric cylinder both at the initial period and a the end period of the drive to avoid abrupt start and stop motion of the guide means 40. A limit switch is used to detect the position of the guide means 40 in the embodiment for simplification. An encoder or other means instead of the limit switch should ensure further fine control. The drive control device 80 is naturally also applicable for positioning the insertion point of the optical fiber into the molten metal.

Fig. 2 is a graph showing the measured result of the temperature of hot metal against the feed speed of the optical fiber using the apparatus of Fig. 1. The vertical axis of the graph is the observed temperature, and the horizontal axis is the time of measurement. At 400 mm/sec. of feed speed, the observed value became constant. Accordingly, the measured value at 400 mm/sec. of feed speed should indicate the temperature of the hot metal. Less feed speed than 400 mm/sec. gave slightly less observed value, or 1 to 2 ° C lower observed temperature than actual value for a speed of 300 mm/sec., and 3 to 4 ° C lower for a speed of 100 mm/sec.

Consequently, for determining the hot metal temperature at an accuracy of ±2 °C as in the case of analysis of chemical reactions, the feed speed may be selected to 300 mm/sec. or more. Since ordinary control of a blast furnace operation requests to determine the hot metal temperature at an accuracy of ±5 ° C, the feed speed may be selected at around 100 mm/sec. The control of blast furnace operation implies to maintain the desulfurization process at a favorable condition, to prevent unfavorable phenomenon and accident which induce instable state of the blast furnace operation, for example, reduction of temperature inside of the blast furnace.

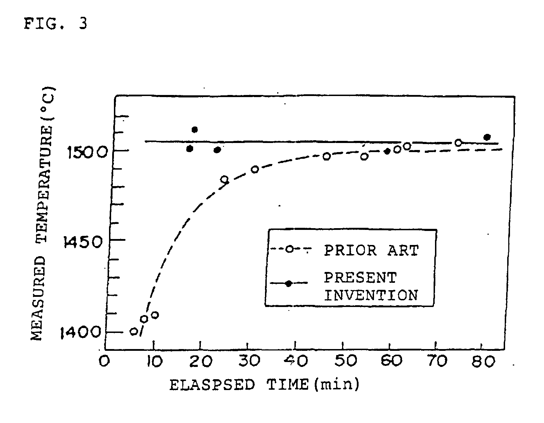

Fig. 3 is a graph comparing the observed temperature under the application of the apparatus according to the present invention with the temperature measurement of hot metal by prior art method. The conditions of measurement are the same as in Fig. 2. That is, the feed speed was 400 mm/sec., and the nitrogen gas as the purge gas was supplied to the guide pipe of the guide part at 2 Nm³/hour of flow rate. The applied prior art used an immersion thermocouple to determine the temperature of the hot metal held in the skimmer using a consuming thermocouple.

In prior arts, the heat is absorbed to the trough that guides the hot metal from the tapping hole to the skimmer during the initial period of tapping, so the hot metal temperature is lowered significantly compared with that in the final period of tapping. As seen in the figure, the temperature of hot metal is lower by 20 ° C even after 25 min. have passed from the beginning of tapping, and 40 min. is required to become 10°C difference, and 1 hour required to become 5 ° C difference. When the apparatus according to the present invention is applied, however, a constant value was obtained independent of the time after beginning the tapping because the hot metal temperature was determined within the jet . Thus the apparatus according to the present invention assures accurate temperature measurement of the hot metal at arbitrary time.

### EMBODIMENT 2

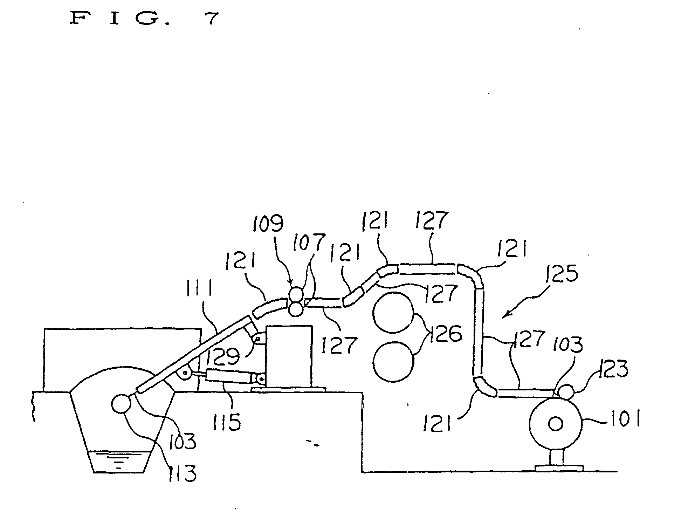

Another apparatus for measuring temperature of molten metal is described below referring to Fig. 7, which apparatus uses a flexible optical fiber guide tube 121. The flexible optical fiber guide tube 121 of the embodiment 2 does not necessarily guide the optical fiber 103 covered with a metallic tube, and may be the one to guide a optical fiber that is not covered with metallic tube.

In the embodiment 2, however, a metal tube covered optical fiber 103 is applied to prevent the optical fiber from being expelled from the jet or from being broken by the dynamic pressure of the jet 113 of the hot metal because the embodiment aims for the apparatus for measuring temperature of molten metal to measure the temperature inside of the hot metal jet 113.

The metal tube covered optical fiber 103 is coiled around the bobbin 101. The starting part of the optical fiber 103, or the rear end of the optical fiber 103, connects with a photo/current converter that structures the radiation thermometer which is attached to the outside of the bobbin 101. The current converted from the light by the photo/current converter is taken out via a rotary connector mounted at near the rotary shaft of the bobbin 101. The optical fiber is further connected to a radiation thermometer.

The base lead of the optical fiber is made of quartz glass having 50 µm of diameter and is covered with a stainless steel tube having 3.2 mm of outer diameter and 0.2 mm of thickness. The uncoiling part of the optical fiber 101 is pressed by the press roller 123 to maintain the constant uncoiling position. The uncoiled optical fiber 103 is fed along the feed passage 125.

The feed passage 125 comprises a straight part 127 and a bend part. The straight part 127 is formed by a stainless steel guide tube. The bend part is formed by a flexible optical fiber guide tube 121 according to the embodiment. By combining the straight part 127 and the bend part 121, the feed passage 125 in arbitrary shape is designed.

There is a feed means 109 comprising pinch rollers 107 at the tip part of the feed passage 125, where the metal tube covered optical fiber 103 is pinched between the pinch rollers 107 and the optical fiber 103 is fed at a constant speed by the rotation of the pinch rollers driven by a motor.

The optical fiber 103 fed from the pinch rollers 107 is sent to the tip guide 111 via the flexible optical fiber guide tube 121. The tip guide 111 is rotatable around a support point 129, which tip guide 111 is rotated by the drive unit 115 to perform swing motion. The swing motion ensures the precise feeding of the tip of the optical fiber 103 into the jet 113 of the hot metal.

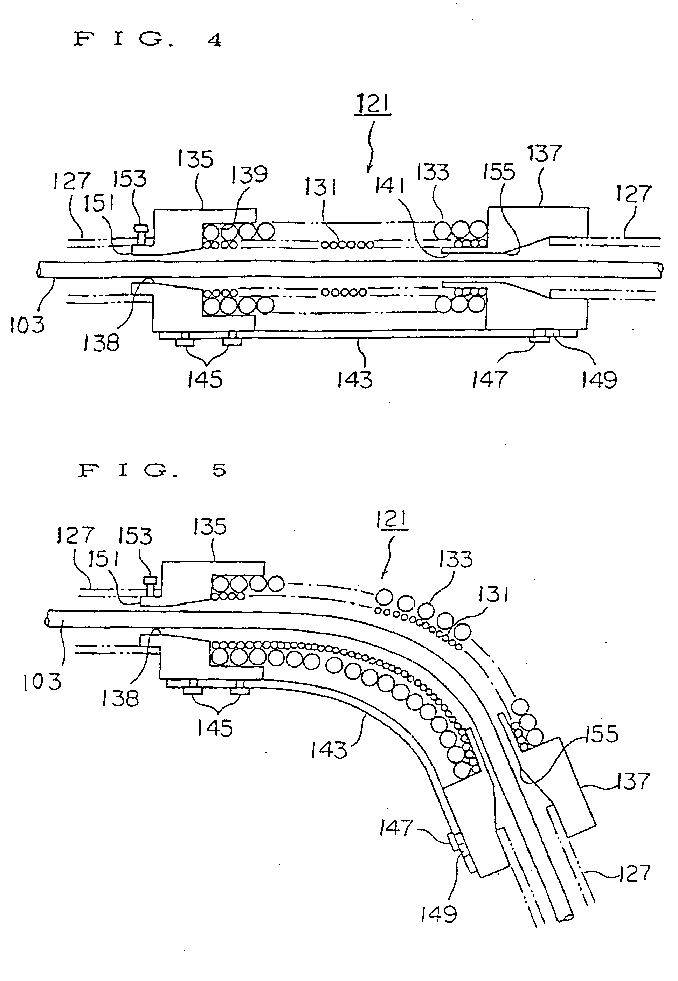

As shown in Fig. 4, the flexible optical fiber guide tube 121 according to the embodiment 2 is preferably structured by a single or double coil springs 131, 133. These coil springs 131, 133 are a type of, for example, tension coil spring. The material of these springs is, for example, stainless steel. The coil springs reduce the friction between the guide tube 121 and the optical fiber 103 covered with the stainless steel tube.

The inner coil spring 131 uses a thin wire not to hitch the tip of the optical fiber at the irregular inner surface of the coil when the tip of the metal tube covered optical fiber 103 passes through the guide tube 121. For example, the size of the inner coil spring 131 is in a range of from 1.0 to 1.5 mm. The inside coiling diameter of the inner coil spring 131 is, for example, 10.5 mm, and the outside diameter thereof is, for example, 12.5 mm.

The outer coil spring 133 uses a thicker wire than the inner coil spring 131 to obtain sufficient rigidity. For example, the size of outer coil spring 133 is 1.4 mm. The inside coiling diameter of the outer coil spring 133 is, for example, 13.2 mm with the outside coiling diameter thereof is, for example, 16 mm.

Both ends of each of the inner coil spring 131 and the outer coil spring 133 which are concentrically arranged are held by the holders 135 and 137, respectively. The holder 135 holds the two coil springs, 131, 133, from outside in a concentrically doubled state.

That is, at the inside of the holder 135, a step 139 is formed concentrically with the hole 138 through which the optical fiber passes. To hold an end of both the coil springs 131, 133 in the step 139, the step 139 is fit the outer side of the outer coil spring 133. The holder 137 holds the inner side of the other end of the doubled coil springs 131, 133. That is, the holder 137 is provided with a cylindrical protrusion 141 for holding the inner side of the spring. The cylindrical protrusion 141 is inserted into the inner side of the inner coil spring 131.

Both holders 135, 137 are connected together by a flat spring 143. That is, a stainless steel flat spring 143 having a specified length is fixed to both holders 135, 137 using bolts 145, 147, to maintain a constant distance between the holders 135, 137, respectively. The bolt 147 on the holder 137 is mounted using a slotted hole 149.

Owing to the slotted hole 149, a small distance of slide is available at the mounting part. If the coil springs 131, 133 bend, the difference in peripheral length between the inner side and the outer side of the coil springs at the bend portion is absorbed by the sliding motion. The flat spring 143 reinforces the rigidity of the outer coil spring 133, and gives optimum radius of curvature for bending.

A stainless steel guide tube that structures a straight part 127 of the feed passage is connected with the outer side of each of the holders 135, 137. For conducting the connection, a short cylindrical protrusion 151 is formed on the holder 135 appeared on left hand of the figure, thus performing the connection with the guide tube 127 using the bolt 153. To the holder 137 appeared on right hand of the figure, a hole 155 is opened for receiving the optical fiber, and the guide tube is press-introduced therethrough.

The holes 138, 155, opened on the holders 135, 137, respectively, receive the optical fiber 103. These holes 138, 155, have a tapered shape to prevent hitching of the optical fiber when the fiber is inserted thereinto.

As described above, the flexible optical fiber guide tube 121 according to the embodiment allows to arbitrarily form a bend part on the feed passage 125 for feeding the optical fiber 3 (refer to the reference number 121 in Fig. 7) owing to the function of the coil springs 131, 133, which are arranged in double state. That is, the bend angle is freely set, which bend angle is a difference in angle between the one to enter the optical fiber 103 into the flexible optical fiber guide tube 121 and the one to exit the optical fiber 103 from the flexible optical fiber guide tube 121. To the set bend angle, an optimum radius of curvature is obtained by the action mainly of the outer coil spring 133 and the flat spring 143.

Since the wire size of the inner coil spring 131 is selectable to a sufficiently thin level, the irregularity at inner side of the coil is minimized. Accordingly, when the optical fiber 103 is introduced for the first time, for example, the occurrence of hitching the optical fiber 103 to induce bending and tangling thereof is prevented.

With the use of a plurality of both the guide tube structuring a straight part 127 and the flexible optical fiber guide tube 121 structuring a bend part, in combined state, the feed passage 125 in arbitrary shape is prepared. For example, the presence of hindrance 126 such as other device between the bobbin 101 and the pinch rolls 107, there is no problem. The distance between the bobbin 101 and the tip guide 111 is selectable sufficiently long.

Also, it is possible to place the bobbin at a remote place to assure safety for replacing the bobbin 101. In addition, the generation of error in temperature measurement owing to bending of optical fiber 103 in the feed passage 125 and the occurrence of incapability for measuring temperature resulted from entanglement of the optical fiber are avoided.

The above-described embodiment dealt with the holders 135, 137, connected by a flat spring 143. Nevertheless, it is possible to eliminate the flat spring 143 in another embodiment to firmly connect each of the holders 135, 137, to each of the coil springs 131, 133, respectively.

The above-described embodiment dealt with the guide tube 127 directly connected with the holders 135, 137. According to another embodiment, as seen in Fig. 6 for example, the guide tube 127 may be connected with the holders 135, 137, via the connector 157. That is, the cylindrical connector 157 may be welded to fix to the external periphery at tip part of the guide tube 127, and the connector 157 may be fixed by the stud bolt 161 on the outer periphery of the cylindrical protrusion 159 on the holder 135. Alternatively, the connector 157 may be inserted into the enlarged part of the hole 155 on the holder 137.

As described above, the flexible optical fiber guide tube according to the embodiment 2 selects the feed passage which feeds the optical fiber in an arbitrary length and shape. In addition, the inner coil spring of the flexible optical fiber guide tube to form a bend part of the feed passage may be fabricated by a thin wire to reduce the friction against the optical fiber. Furthermore, the outer coil spring may be fabricated by a thick wire to provide sufficient rigidity under a bent condition thereof.

With the use of the flexible optical fiber guide tube according to the embodiment 2 to the bend part of the apparatus for measuring temperature of molten metal, the distance between the bobbin and the tip guide is selected to a sufficiently large value. In addition, the feed passage is available in an arbitrarily bend shape between the bobbin and the tip guide, not a straight passage as in prior art. Furthermore, the protection of the optical fiber with the flexible optical fiber guide tube prevents the occurrence of bending and entanglement of the optical fiber even when the optical fiber is introduced for the first time therethrough.

### EMBODIMENT 3

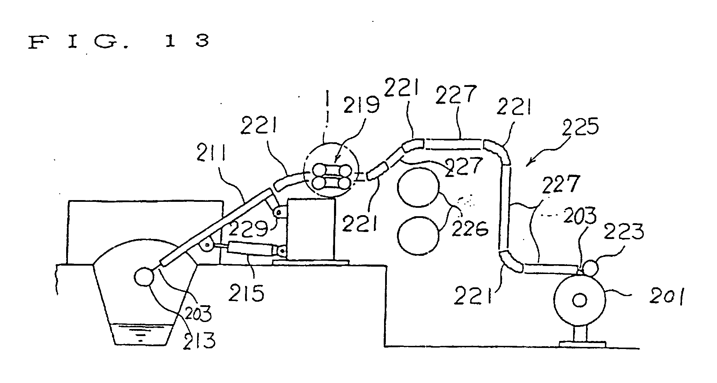

An apparatus for measuring temperature of molten metal, which apparatus uses an optical fiber feed means 219 according to the embodiment, is described below referring to Fig. 13.

The optical fiber feed means 219 according to the embodiment 3 is not necessarily the one to feed the optical fiber 203 covered with a metal tube, but may be the one to guide a simple optical fiber not covered with metal tube. In the embodiment, however, a metal tube covered optical fiber 203 is applied to prevent the optical fiber from being expelled from the jet or from being broken because the embodiment aims for the apparatus for measuring temperature of molten metal to measure the temperature inside of the hot metal jet 213.

The metal tube covered optical fiber 203 is coiled around the bobbin 201. The starting part of the optical fiber 203, or the rear end of the optical fiber 203, is connected to a photo/current converter that structures the radiation thermometer which is attached to the outside of the bobbin 201. The current converted from light by the photo/current converter is taken out via a rotary connector mounted near the rotary shaft of the bobbin 201. A rotary optical connector connects optically with the optical fiber at the stationary end thereof. The optical fiber further connects with the radiation thermometer.

The uncoiling part of the optical fiber 201 is pressed by a press roller 223 to maintain the constant uncoiling position. The uncoiled optical fiber 203 is fed along the feed passage 225.

The feed passage 225 comprises a straight part 227 and a bend part. The straight part 227 comprises a stainless steel guide tube. The bend part is formed by a flexible optical fiber guide tube 221. By combining the straight part 227 and the bend part 221, the feed passage 225 in arbitrary shape is designed.

There is feed means 219 according to the embodiment at the tip of the feed passage 225, where the metal tube covered optical fiber 203 is pinched thereby, and the optical fiber 203 is fed at a specified speed by the rotation of a motor.

The optical fiber 203 fed from the optical fiber feed means 219 is sent to the tip guide 211 via the flexible optical fiber guide tube 221. The tip guide 211 is rotatable around a support point 229, which tip guide 211 is rotated by the drive unit 215 to perform swing motion. The swing motion ensures the precise feeding of the tip of the optical fiber 203 into the jet 213 of the hot metal.

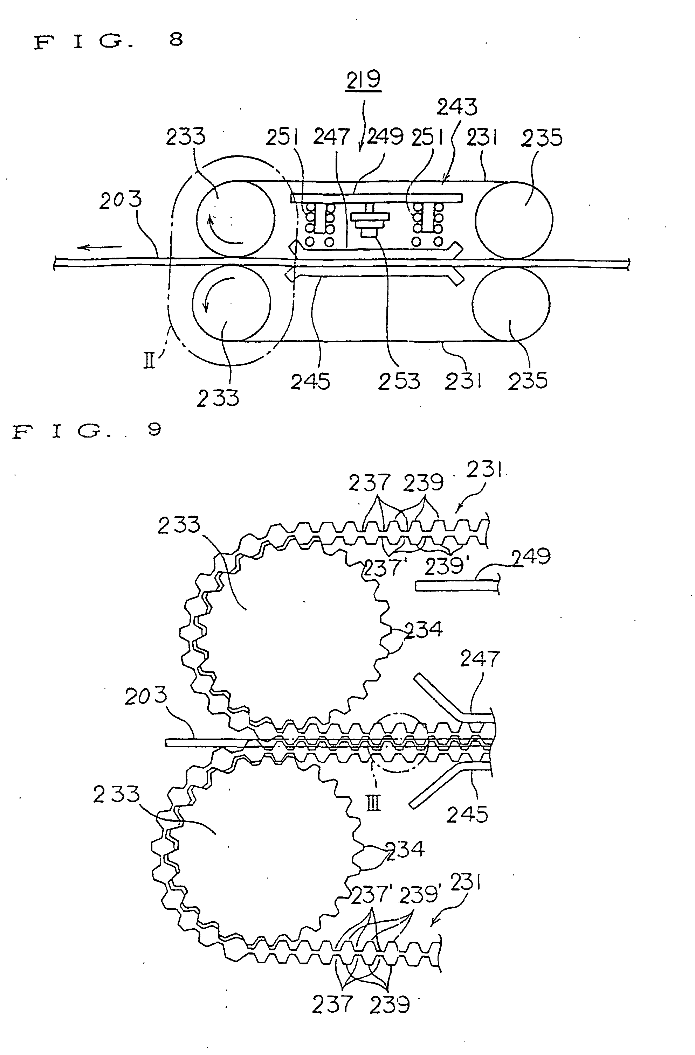

The optical fiber feed means 219 is described below referring to Figs. 8 through 12.

The optical fiber feed means 219 comprises a pair of resin endless belts 231. Each of the endless belts 231 is driven by the drive roll 233 and the driven roll 235. The pair of the endless belts 231 are arranged in parallel to contact each other at an outer face thereeach. The optical fiber 203 is fed being sandwiched between the parallel-arranged endless belts 231.

Each of the endless belts 231 is made of a rubber belt having abrasion resistance with a reinforcing cloth core to assure the strength. The endless belt 231 has a plurality of lateral grooves 237 at an equal spacing, thus forming a lateral rib 239 between adjacent lateral grooves 237. The cross section of each lateral groove 237 and lateral rib 239 has a tooth tip and a tooth root mating thereeach.

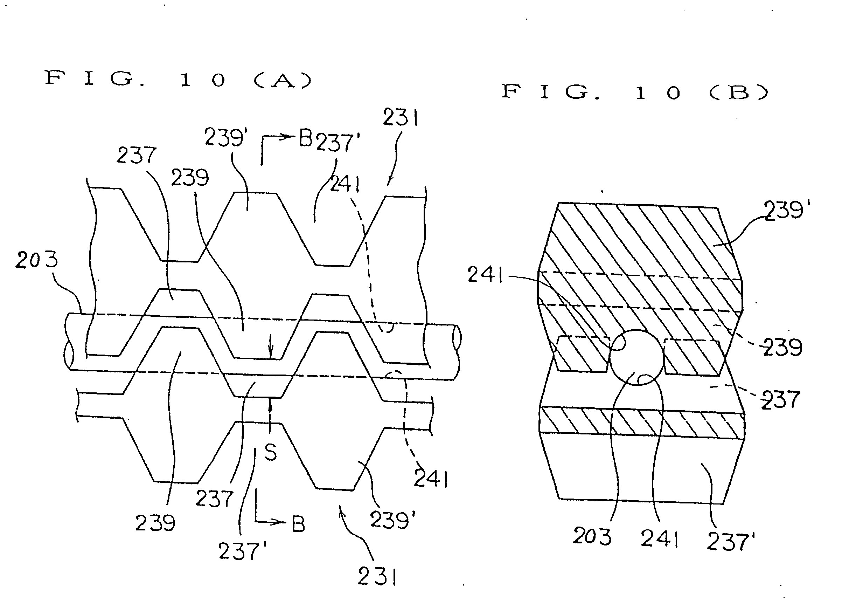

On the outer face of the endless belt 231, a longitudinal groove 241 is formed at near the center of the width along the longitudinal direction as shown in Fig. 10(B). The longitudinal groove 241 is for mating with the optical fiber 203, and makes the plurality of lateral grooves 237 connect each other. The cross section of the longitudinal groove 241 is in a U-shape that matches the outer shape of the optical fiber 203 covered with metallic tube. The shape of the longitudinal groove 241 may be, however, a V-shape instead of U-shape.

Each of the pair of endless belts 231 being arranged to contact the outer surface each other is arranged by offsetting by 1 pitch of lateral grooves 237 on each of the endless belts 231 to mate together.

As shown in Fig. 10, the optical fiber 203 is in a state of mating to the longitudinal groove 241. The dimensions of the lateral grooves 237 and the longitudinal groove 241 are formed to keep a specified gap, S, between the lateral groove 237 on an endless belt 231 and the lateral rib 239 on the other endless belt 231 that mates the lateral groove 237, not making perfect contact thereeach.

The drive roll 233 and/or the driven roll 235 may be connected by gears or the like between the pair of endless belts 231 (between top and bottom of Fig. 8). Alternatively, instead of that type of connection, the driving force of one side of the drive roll 233 may be transmitted to the other side of rolls 233 via a pair of endless belts 231.

The press device 243 presses the endless belts 231 to a thickness direction in a state that the belts are contacted each other using the lower stationary guide 245 and the upper guide 247, as shown in Fig. 8. That is, the upper guide 247 is pressed to a direction of the lower stationary guide 245 by a pair of press springs 251 located on the base 249.

The position of the base 249 is adjusted by the pressing force adjust bolt 253. The pressing force adjust bolt 253 adjusts the position of the base 249 in vertical direction, thus adjusting the distance between the base 249 and the upper guide 247, or the length of the press spring 251, and the pressing force is adjusted.

To drive the endless belts 231 by the drive rolls 233 and the driven rolls 235, the inner face of the endless belts 231 is also provided with a plurality of lateral grooves 237' and lateral ribs 239' as in the case of the outer face. The teeth 234 which mate these lateral grooves 237' are formed on the rolls 233, 235.

The following is the description of functions of the optical fiber feed means which has the structure described above.

When the drive rolls 233 rotate to drive the endless belts 231, the optical fiber 203 is fed to the longitudinal direction in a state that the optical fiber 203 is sandwiched between the pair of the endless belts 231. At this moment, the optical fiber 203 mates the longitudinal groove 241, and high friction factor appears at a corner that the longitudinal groove 241 crosses the lateral grooves 237.

A long endless belt 231 is available, which long endless belt 231 applies a sufficiently high friction force to the optical fiber 203 being sent out from the endless belts 231.

The portion that the outer faces of a pair of endless belts 231contacting each other is a straight portion. Since the optical fiber 203 mates the longitudinal groove 241 which was formed on the straight outer peripheral face, the optical fiber 203 is guided accurately in a straight passage. Accordingly, there is no possibility of fluctuation of optical fiber sent from the pinch rolls which are rotating under a point-contact condition, which fluctuation is observed in prior art.

In this manner, the optical fiber 203 which is sent from the optical fiber feed means 219 is accurately fed to the tip guide 211.

In addition, as shown in Fig. 10, the distance, S, between the lateral groove 237 and the lateral rib 239 is set at a sufficiently large value in a state that the optical fiber mates the longitudinal groove. So the stroke of the press spring 251 on the press device 243 is able to set to a satisfactorily large value. Consequently, the adjustment of pressing force of the press device 243 against the optical fiber 203 becomes very easy. As a result, excessive pressing force is vanished.

Since the contact portion between the optical fiber 203 and the endless belt 231 becomes sufficiently long, the pressing force is dispersed. Accordingly, the abrasion on the endless belts 231 decreases to extend the life of optical fiber feed means 219.

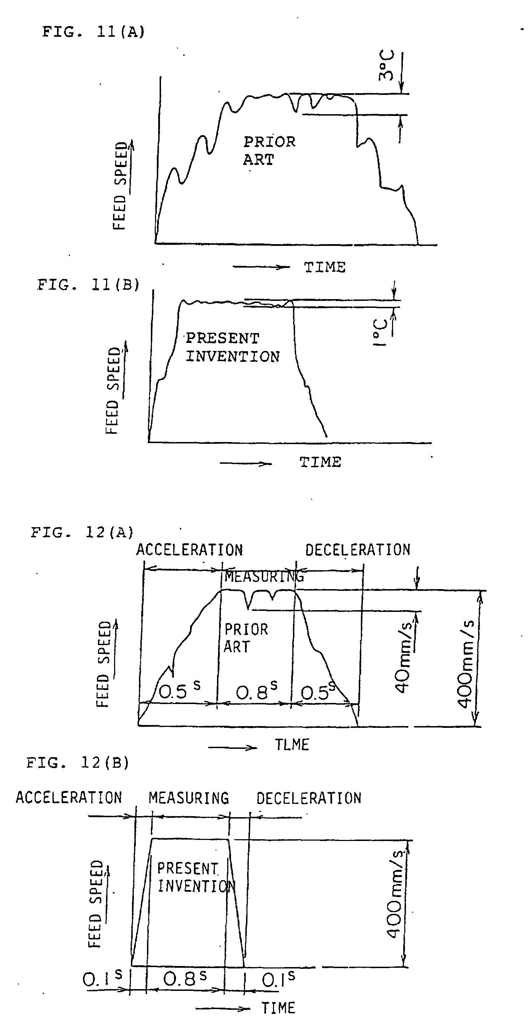

Since the feed is performed with a sufficiently large friction force, slip on feeding is suppressed. In prior art which is shown in Fig. 12(A), it takes 0.5 sec. for accelerating the feed of optical fiber 203, and 0.5 sec. for decelerating the optical fiber after maintaining the required specific feed speed (400 m/sec.) for 0.8 sec. Even during the period of specified feed speed, there occurred intermittent slip to generate a dispersion of feed speed at a magnitude of max. 40 mm/sec.

To the contrary, as shown in Fig. 12(B), the optical fiber feed means 219 according to the embodiment gave 0.1 sec. for completing acceleration, and showed no dispersion in the feed speed during the period for maintaining a specified feed speed for 0.8 sec. The deceleration completed within 0.1 sec.

Owing to the reduction of slip by applying the optical fiber feed means 219 according to the embodiment, the observed temperature showed less dispersion than that in prior art, as shown in Fig. 11. That is, a feed mechanism using a conventional pinch rolls gave about 3 ° C of dispersion (Fig. 12(A)), and the embodiment gave about 1 ° C of dispersion (Fig. 12(B)).

The above-described embodiments use an optical fiber 203 covered with a metal tube. For another embodiment, the present invention is applicable for an ordinary optical fiber without covered by metal tube.

According to the above-described embodiment, the lateral grooves 237' having the same shape with that of the lateral grooves 237 on the outer face are formed also on the inner face of the endless belts 231, 231, which is shown in Fig. 9, and the rolls 233, 235, and have teeth 234 mating these lateral grooves 237'. In another embodiment, however, the shape of the lateral grooves 237' on the inner face are not necessarily the same with the shape of the lateral grooves 237 on outer face, and they may be a small lateral grooves, at need.

The contact between the inner peripheral faces of the endless belts 231 and the rolls 233, 235, may be conducted on a flat plane. The driving force transmission is possible even on a flat plane if only some level of tension is applied to the endless belts 231.

According to the above-described embodiment, the endless belt 231 is fabricated integrally by a rubber. Nevertheless, in another embodiment, the endless belt may be made of other synthetic resin, and may have a composite structure combining a plurality of pieces instead of integral structure.

As described above, according to the embodiment 3, the optical fiber is fed by a pair of endless belts in a state of what is called the sandwiching therebetween in longitudinal direction, so the portion that the optical fiber contacts with the endless belts can be selected to a long distance range along the longitudinal direction to assure sufficiently large friction force. In addition, the optical fiber is fed in a state of mating thereof to the longitudinal groove while attaining a high friction factor at a corner that the longitudinal groove crosses the lateral grooves. As a result, slip hardly occurs.

Since the contact portion above-described is available in a long distance range along the endless belts, the friction force is dispersed over the long contact portion, thus hardly generating abrasion.

Furthermore, with the use of the optical fiber feed means to the apparatus for measuring temperature of molten metal according to the embodiment 3, the optical fiber can be easily fed at a specified speed corresponding to the consumption of the optical fiber in the molten metal, and the loss of optical fiber occurring during acceleration and deceleration periods is minimized.

### EMBODIMENT 4

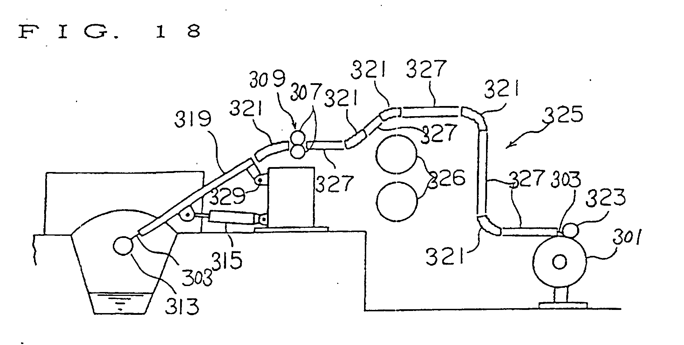

An apparatus for measuring temperature of molten metal using an optical fiber tip guide unit 319 according to the embodiment is described below referring to Fig. 18.

The optical fiber tip guide unit 319 of the embodiment 4 does not necessarily guide the optical fiber 303 covered with a metal tube, and may be the one to guide a simple optical fiber that is not covered with metal tube. In the embodiment, however, an optical fiber 303 covered with a metal tube is applied to prevent the optical fiber from being expelled from the jet or from being broken by the dynamic pressure of the jet 313 of the hot metal because the embodiment aims for the apparatus for measuring temperature of molten metal to measure the temperature inside of the hot metal jet 313. The optical fiber 303 covered with a metal tube is coiled around the bobbin 301.

The uncoiling part of the optical fiber 301 is pressed by a press roller 323 to maintain the constant uncoiling position. The uncoiled optical fiber 303 is fed along the feed passage 325.

The feed passage 325 comprises a straight part 327 and a bend part. The straight part 327 comprises a stainless steel guide tube. The bend part is formed by a flexible optical fiber guide tube 321. By combining the straight part 327 and the bend part 321, the feed passage 325 in arbitrary shape is designed.

There is a feed mechanism 309 comprising the pinch rollers 307 at the tip of the feed passage 325, where the optical fiber 303 covered with a metal tube is pinched between the pinch rollers 307 and the optical fiber 303 is fed at a specified speed by the rotation of a motor.

The optical fiber 303 fed from the pinch rollers 307 is sent to the optical fiber tip guide unit 319 according to the embodiment via the flexible optical fiber guide tube 321. The optical fiber tip guide unit 319 is rotatable around a support point 329, which tip guide unit 319 is rotated by the drive unit 315 to perform swing motion. The swing motion ensures the precise feeding of the tip of the optical fiber 303 into the jet 313 of the hot metal.

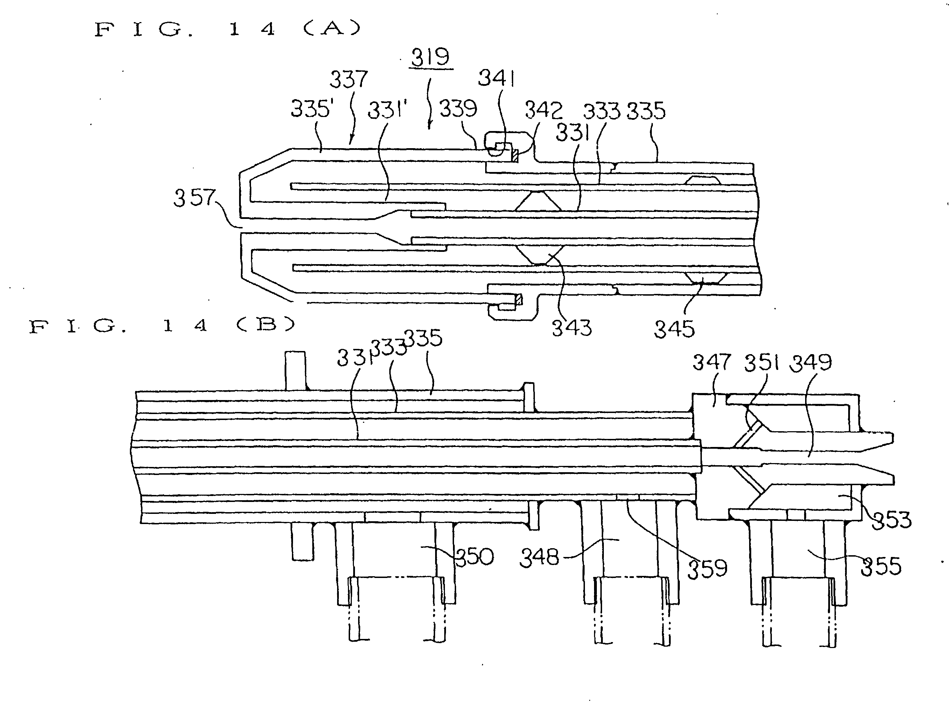

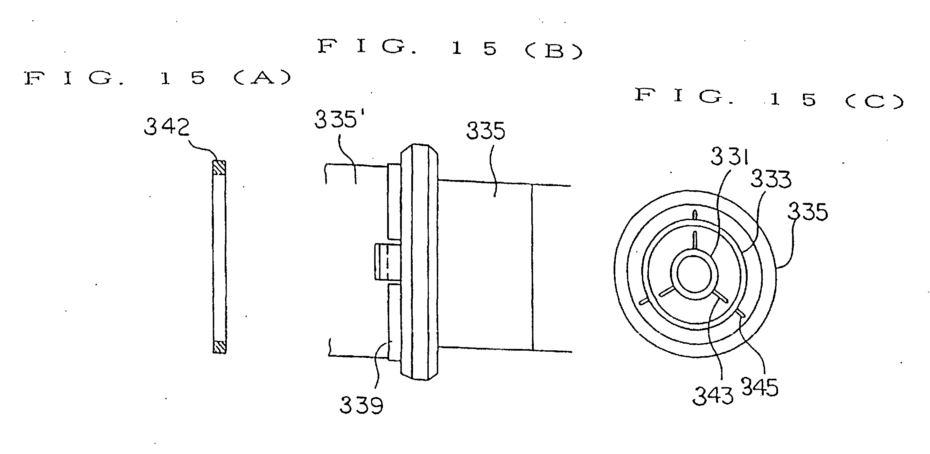

The optical fiber tip guide unit 319 according to the embodiment is described below referring to Figs. 14 through 16.

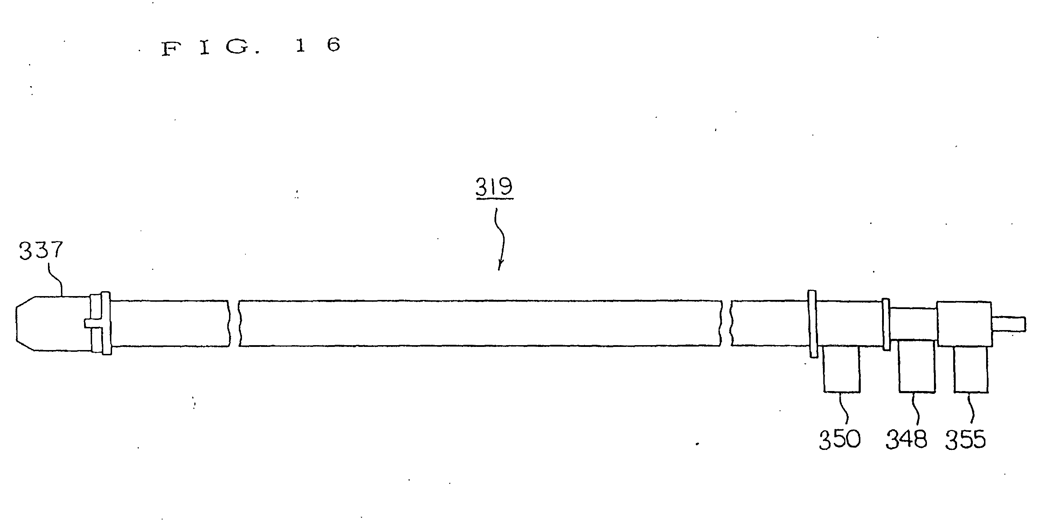

As shown in Fig. 16, the optical fiber guide unit 319 has a rod shape as a whole, and guides the optical fiber 16 therethrough. The inner structure is illustrated in Fig. 14, which is a triple structure comprising concentrically arranged inner cylinder 331, middle cylinder 333, and outer cylinder 335. The inner cylinder 331 accepts the optical fiber 303 for passing therethrough and receives injected air as the primary coolant. The middle cylinder 333 and the outer cylinder 335 are connected each other at the tip part of the optical fiber guide unit 319, and receive injected air as the secondary coolant.

The tip part 337 of the optical fiber guide unit 319 is detachable by the male screw 339 attached to the outer cylinder 335' at the tip part 337 and by the female screw 341 attached to the outer cylinder 335 at the body part. The butting part of the tip part 337 and the body part has a packing 342 made of pure copper. The inner cylinder 331' at the tip part 337 receives the inserted inner cylinder 331 at the body part to fit them together.

The inner cylinder 331' at the fitted tip part 337 has a tapered inner peripheral face to prevent incoming optical fiber 303 from hitching. The middle cylinder 333 belongs common to the tip part 337 and the body part.

Each of the inner cylinder 331, the middle cylinder 333, and the outer cylinder 335 is kept to maintain a specified radial distance by each other using the spacers 343, 345, which are mounted on outer peripheral face of the inner cylinder 331 and of the middle cylinder 333, respectively.

The outer cylinder 335 ends at the outer periphery of the base part of the optical fiber guide unit 319, and the end of the outer cylinder 335 is welded to the outer periphery of the middle cylinder 333. Then the exposed middle cylinder 333 and the inner cylinder 331 are welded to the base part 347. The exposed part of the middle cylinder 333 is provided with an air charge opening 348 to introduce the air as the secondary coolant. At near the end point of the outer cylinder 335, an air discharge opening 350 is opened to vent the air as the secondary coolant.

The inner cylinder 331 penetrates the base part to form a opening 349 to introduce the optical fiber 303. Nozzles 351 connected with the opening 349 are also formed through the base part. The size of the nozzle 351 is, for example, 2 mm. For example, twelve nozzles 351 are arranged on a circumferential line around the opening 349 at an equal spacing. The direction of each nozzle 351 is in a swirl-forming direction around the center opening 349.

Air as the primary coolant is injected from the opening 349 into the nozzles 349 and the inner cylinder 331 to induce adiabatic expansion thereof. The adiabatic expansion makes the injected air absorb the surrounding heat. The air is injected to a swirl-forming direction while absorbing heat, thus cools the optical fiber 303. The nozzles 351 connect with the port 353 which is formed at outer peripheral part of the base part 347, and further connect with the charge opening 355 of the primary coolant.

For example, the inside diameter of the opening 349 which connects with the inner cylinder 331 at the base part is 4 mm, and the inside diameter of the inner cylinder 331 at the tip part 337 is 5 mm. Therefore, if the outside diameter of the optical fiber 303 covered with metal tube is 3.6 mm, then the gap between the optical fiber 303 covered with metal tube and the inner cylinder 381 or the hole 349 becomes larger at the tip part 337 than at the base part, so the primary coolant injected is discharged from the tip hole 357 at the tip part 337.

Since the discharged air at the tip opening 357 has a high velocity, the optical fiber 303 is pushed by the dynamic pressure of the air to position at the center of the inner cylinder 331'. As a result, the optical fiber 303 is fed smoothly with no contact resistance against the inner cylinder 331'. The air flows at a low rate so that the discharged air diffuses and does not cool the hot metal jet 313 (Fig. 18).

On the other hand, the air as the secondary coolant is charged from he air charge opening 348. An orifice 359 is formed in the charge opening 348 to make the charged air expand adiabatically to absorb heat from surrounding atmosphere. Then the air passes through the middle cylinder 333 and reaches the tip part 337 without significantly increasing the temperature. At the tip part 337, the air turns the flow direction by 180 deg., passes through the outer cylinder 335 to function the cooling effect, then the air comes out from the discharge opening 350.

As described above, according to the embodiment, the air as the primary coolant cools the optical fiber 303 in the inner cylinder 331, and the air as the secondary coolant cools the middle cylinder 333 and the outer cylinder 335. By the separated cooling, the cooling function is further enhanced.

The separate cooling for the optical fiber 303 and for the tip guide assures sufficient flow speed of the primary coolant to cool the optical fiber 303 while suppressing the flow rate thereof. The suppression of the flow rate avoids the disadvantage of cooling the hot metal jet 313. In addition, the assurance of sufficient flow speed provides satisfactory cooling effect by adiabatic expansion.

Since the secondary coolant is introduced to the middle cylinder 333, the coolant reaches the tip part 337 before significantly raises its temperature. As a result, the heat exchange at the tip part 337 is positively performed, thus enhances the cooling effect as a whole.

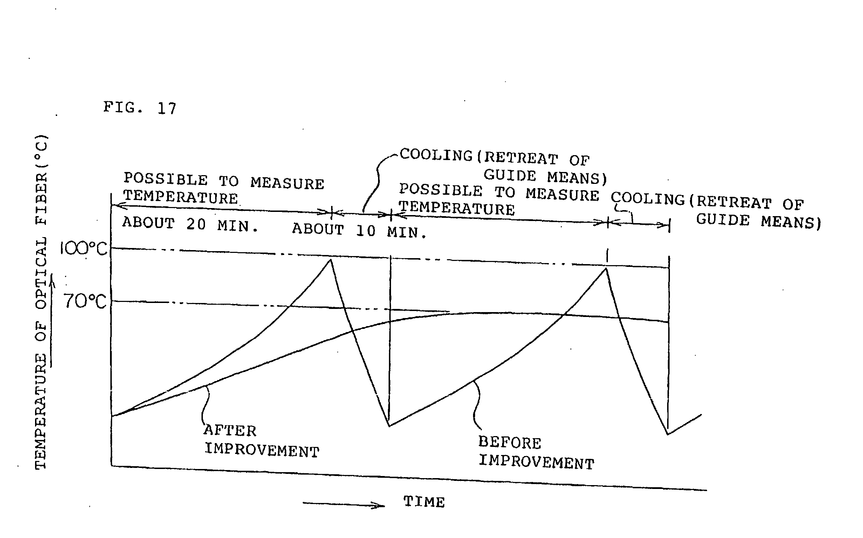

Consequently, according to the embodiment, a sufficient cooling effect is achieved, and excellent experimental result as shown in Fig. 17 was obtained. That is, in a conventional tip guide, an observation for 20 min. of period at near the hot metal jet showed that the temperature of optical fiber 303 being fed reached a limiting level of 100 ° C so that the tip guide was needed to retreat for cooling for about 10 min.

By repeating the measurement and retreat cycle, the conventional method could only an intermittent temperature measurement. To the contrary, according to the embodiment, sufficient cooling effect suppresses the temperature increase of the optical fiber 303 to only about 70 ° C, thus enables a continuous temperature measurement.

Since the tip part 337 of the optical fiber guide unit 319 is detachable against the body part, it can be replaced at any time. Therefore, if the inner cylinder 331' is plugged by adhesion and growth of hot metal particles, only the tip part 337 is necessary to be replaced while other parts are reused.

The above-described embodiment uses air as the coolant. Air is a favorable coolant available at a low cost. Nevertheless, nitrogen and argon may be applied as the coolant. In the case that a gas such as air is used, a preferred pressure of the gas is 5 kgf/cm² or more to obtain cooling effect using the adiabatic expansion of the gas.

As described above, according to the present invention, the primary coolant cools the inner cylinder where the optical fiber passes through, and the secondary coolant cools the middle cylinder and the outer cylinder. That is, the optical fiber and the tip guide are separately cooled. The configuration enhances the cooling function. The primary coolant is injected through nozzles to adiabatically expand, which adiabatic expansion absorbs heat from surrounding atmosphere to increase the cooling efficiency.

### EMBODIMENT 5

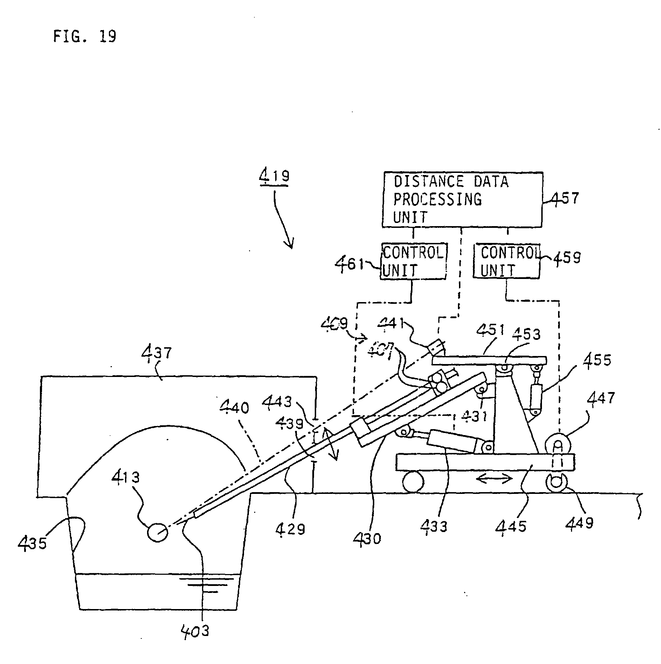

Embodiment 5 of the present invention is illustrated in Figs. 19 through 23.

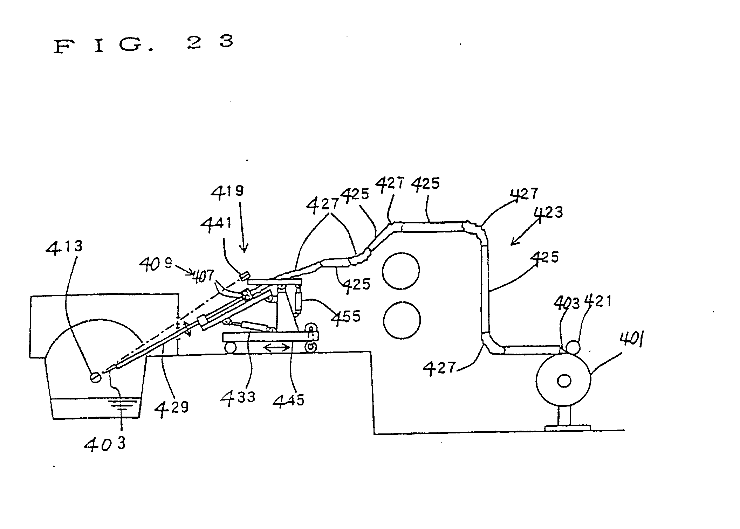

An apparatus for measuring temperature of molten metal, which apparatus uses an optical fiber tip positioning unit 419, is described below referring to Fig. 23. The optical fiber tip positioning unit 419 does not necessarily position the optical fiber 403 covered with a metallic tube, and may be the one to guide a simple optical fiber that is not covered with metallic tube.

In the embodiment, however, an optical fiber 403 covered with a metal tubeis applied to prevent the optical fiber from being expelled from the jet or from being broken by the dynamic pressure of the jet 413 of the hot metal because the embodiment aims for the apparatus for measuring temperature of molten metal to measure the temperature inside of the hot metal jet 413.

The metal tube covered optical fiber 403 is coiled around the bobbin 401. The starting part of the optical fiber 403, or the rear end of the optical fiber 403, is connected to a photo/current converter that structures the radiation thermometer which is attached to the outside of the bobbin 401. The current converted from light by the photo/current converter is taken out via a rotary connector mounted near the rotary shaft of the bobbin 401. The optical fiber further connects with the radiation thermometer.

The base lead of the optical fiber 403 is made of quartz glass having 50 µm of diameter and is covered with a stainless steel tube having 3.2 mm of outer diameter and 0.2 mm of thickness. The uncoiling end of the optical fiber 403 is pressed by the press roller 421 to maintain the constant uncoiling position. The uncoiled optical fiber 403 is fed along the feed passage 423.

The feed passage 423 comprises a straight part 425 and a bend part 427. The straight part 425 comprises a stainless steel guide tube. The bend part 427 is formed by a flexible optical fiber guide tube. By combining the straight part 425 and the bend part 427, the feed passage 423 in arbitrary shape is designed.

There is a feed mechanism 409 comprising pinch rollers 407 at the tip of the feed passage 423, where the optical fiber 403 covered with a metal tubeis pinched between the pinch rollers 407 and the optical fiber 403 is fed at a specified speed by the rotation of a motor.

The optical fiber 403 fed from the pinch rollers 407 is sent to the tip guide 429. The tip guide 429 is mounted on the guide base 430 and is rotatable around the supporting point 431, which tip guide 429 is rotated by the drive unit 433 to perform swing motion. The swing motion ensures the precise feeding of the tip of the optical fiber 403 into the jet 413 of the hot metal.

The following is the description of the optical fiber tip positioning unit 419 for positioning the tip of the optical fiber 403 precisely into the hot metal 413 using the guide drive unit 433 to drive the tip guide 429.

The trough cover 437 is applied onto the trough 435 that receives the hot metal jet 413. Through the window 439 opened on the trough cover 437, the tip guide 429 that guides the optical fiber 403 is inserted. The trough cover 437 also has the window 443 through which the laser light 440 which is oscillated by the laser distance measuring device 441 passes to determine distance, which laser distance measuring device 441 is described below.

The tip guide 429 and the laser distance measuring device 441 are mounted on the carriage 445. The carriage 445 has wheels 449 which are rotated by the vehicle drive motor 447 to make the forward/backward movement of the vehicle against the hot metal 413. The laser distance meter 441 is mounted on the laser base 451. The laser base 451 is supported in a free-rotating mode around the rotation center 453, which laser base 451 is freely rotated by the laser drive unit 455 comprising an electric cylinder.

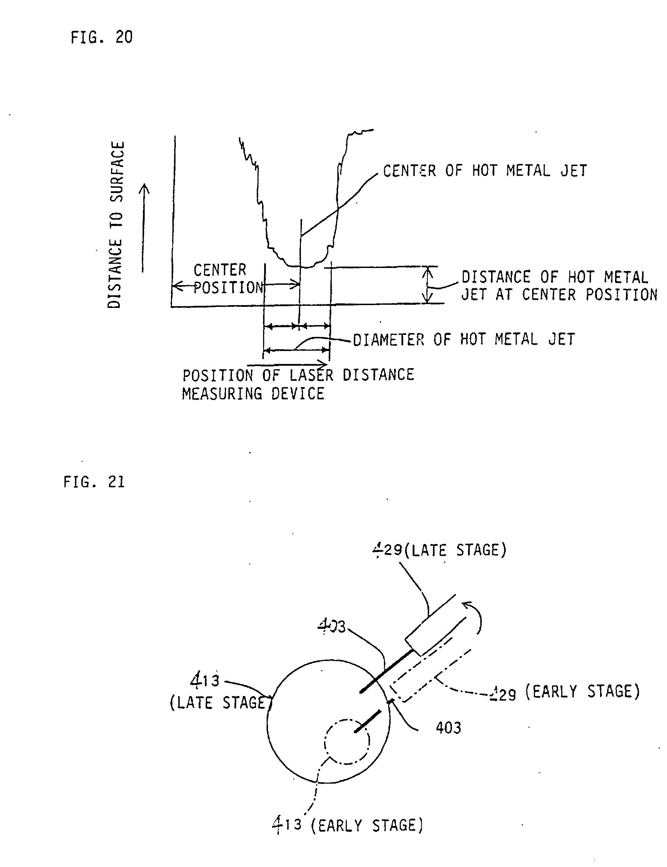

The laser distance measuring device 441 sends the observed distance data to the distance data processing unit 457. The distance data processing unit 457 prepares the distance distribution data based on the distance data acquired under the rotation of the laser distance measuring device 441 to change the direction of measurement. Fig. 20 shows the distribution of observed data of distance from the surface of hot metal jet determined by a laser distance measuring device. From the prepared distribution data, the center position of the hot metal jet 413 is computed. The center position means the center position on a right angle cross sectional plane of the hot metal jet determined by taking into account of the direction and position of rotation of the laser distance measuring device 441 and further of the distance from the laser distance measuring device 441 and the hot metal jet.

Also from the distribution data, the distance from the surface of the hot metal jet 413 at the center position is computed. By adding the radius of the hot metal jet 413 to the computed distance to the surface, the precise distance to the center of the hot metal jet 413 is determined. The diameter of the hot metal jet 413 is available from the distribution data. The laser drive unit 455 rotates the laser distance measuring device 441 intermittently to acquire data in every intermittent movement, and computes the center position of the hot metal jet 413 and the distance from the center position.

Through the procedure described above, the optical fiber 403 is able to be fed at all time to a specified position on a cross sectional plane of the hot metal jet 413. The specified position is shown in Fig. 21. That is, the area and position of cross section of the hot metal jet 413 differ during the early stage of tapping from during the late stage of tapping. For example, the diameter of the hot metal jet 413 is about 50 mm during the early stage and about 150 mm during the late stage. However, the information of the center position of the hot metal jet 413 and of the distance from the center position identifies the position to feed the optical fiber 403 in a cross sectional shape (nearly circular) of the hot metal jet.

Based on the center position and the distance thus computed, the distance data processing unit 457 generates control signal to the control units 459, 461. Then, the control units 459, 461, generate the drive signal to the vehicle drive motor 447 and the tip guide drive unit 433. The wavelengh of laser light used in the laser distance measuring device 441 is other than the wavelength generated from the hot metal jet 413. The vehicle drive motor 447 and the tip guide drive unit 433 structure the guide drive unit for driving the tip guide 429.

Accordingly, the optical fiber 403 is always fed precisely to the center position of the cross sectional shape (nearly circular) of the hot metal jet 413 even under a condition that the area and position of the cross section of the hot metal jet 413 differ with time.

With the above-described embodiment, the work to adjust the position for feeding the optical fiber 403 into the hot metal jet 413 is automatically conducted using the laser distance measuring device 441 without applying visual observation of operator. Since the adjustment is able to be performed at any time, the adjustment work responds always to the change of hot metal jet 413 with time, thus enabling the continuous temperature measurement of the hot metal jet 413, which in turn increases the accuracy of temperature measurement.

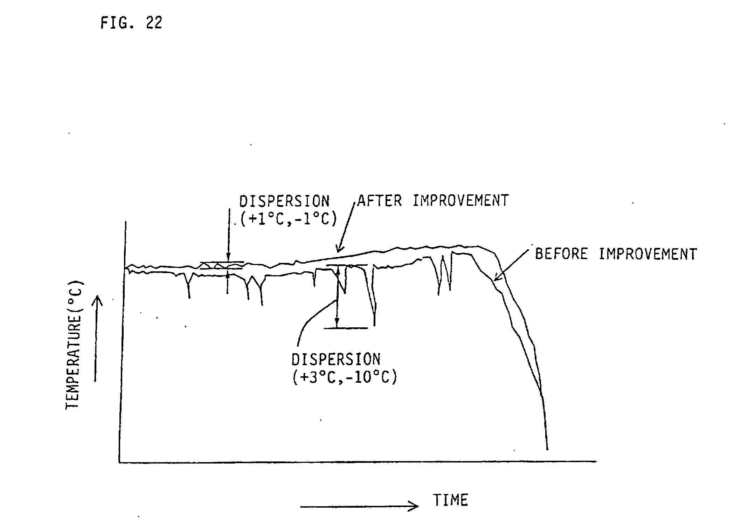

That is, as shown in Fig. 22, conventionally (before improvement) the position adjustment is carried out by manual operation based on the visual observation of operator, and the determined temperature gave a dispersion ranging from +3 ° C to -10°C during a single cycle of temperature measurement. According to the embodiment, however, automatic determination of distance is conducted using the laser distance measuring device 441 instead of visual observation, and the position adjustment of the optical fiber 403 is automatically performed, so the dispersion is narrowed to an approximate range of ±1°C.

The above-describe embodiment uses the tip guide drive unit 433 and the laser drive unit 455 as the electric drive cylinder. Nevertheless, in another embodiment, other type of driving power source may be used.

The drive of the laser distance measuring device 441 may be only mainly rotational movement (swinging) or may be a movement which is generated by combining the rotating movement and the forward/backward movement (sliding) of the carriage 445. A preferred direction of the driving and transferring is a right angle against the hot metal jet 413. In a similar manner, the drive of the tip guide 429 may be a rotational movement induced by the electric cylinder as the tip guide drive unit 433, or it may be a combined movement of the rotation and the forward/backward movement of the vehicle 433. Furthermore, other drive structure may be applied, which structure, for example, includes a tip guide 429, a part of which is formed into a free forward/backward moving support unit, thus driving thereof by the forward/backward movement.

As described above, according to the optical fiber tip positioning unit of the embodiment, there is no need of visual observation to monitor the change of diameter and center position of molten metal jet by operator. Accordingly, the operator is not requested to stay near the molten metal jet to visually observe thereof, which is safe for the operator. In addition, there is no need of installing ITV or other device for remote monitoring. Furthermore, the center position of the molten metal jet and the distance from the molten metal jet are determined precisely by the laser distance meter. Thus obtained center position and distance allow to adjust the feed position of the optical fiber so that the accuracy of the temperature measurement increases.

### MAIN EMBODIMENT 6

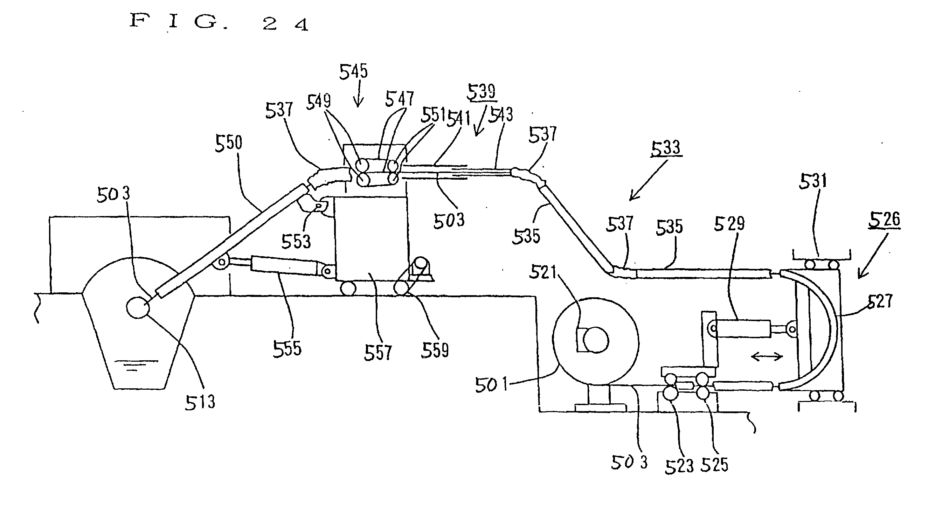

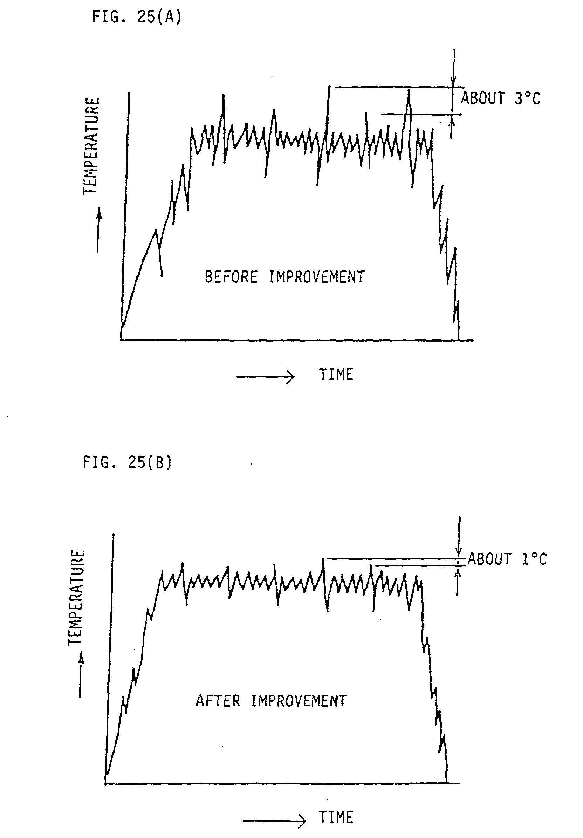

The following is the description of the main Embodiment 6 of the present invention referring to Figs. 24 and 25.

Embodiment 6 provides an apparatus for measuring temperature of molten metal with an optical fiber looper unit 526. The apparatus for measuring temperature of molten metal is provided with a bobbin 501 coiled with an optical fiber 503 connecting with a radiation thermometer, a feed passage 533 which feeds the optical fiber, a slide guide 539 which guides the optical fiber sent from the feed passage, and a feeder 545 which feeds the optical fiber into the molten metal.

The optical fiber looper 526 is provided with an optical fiber looper unit which temporarily stores the optical fiber thereon and again feeds the optical fiber through the feed passage. A photo/current converter structuring the radiation thermometer is mounted to the outer side face of the bobbin 501 which coils the optical fiber 503 therearound. The rear end of the coiled optical fiber 503 is connected with the photo/current converter.

Current that was converted from light by the photo/current converter is then taken out via a rotary joint mounted near the rotary shaft of the bobbin 501. A unit and other devices are installed to determine the temperature based on the taken out current and to record the change in observed temperature.

The bobbin 501 has a brake 521 to prevent irregular motion of the optical fiber 503 during uncoiling thereof. A measure roll 523 is located at downstream (or the side of sending out) of the bobbin on the passage of the optical fiber 503.

The measure roll 523 detects the consumption of optical fiber 503 for determining the temperature error owing to the change in the length of the optical fiber 503 which is coiled around the bobbin 501, (the optical fiber 503 is consumed in every cycle of feeding into the hot metal jet 513, or the molten metal.) The measure roll 523 also notifies the timing of replacement of the bobbin 501 when the consumption comes near to a predetermined limit.

Pinch rolls 525 are located at further downstream of the measure roll 523. The pinch rolls 525 actuate intermittently to feed a specified length of optical fiber necessary for a single temperature measurement cycle. The pinch rolls 525 feed the optical fiber 503 to the belt feeder 545 which is described below by introducing the optical fiber 503 therethrough after replacement with a new bobbin 501.

The optical fiber looper unit 526 is located at downstream of the pinch rolls 525. That is, there are the looper body 527 in a shape of circular arc for temporarily storing the optical fiber 503 therein, and the looper drive unit 529 to extend/contract the looper body 527. The looper drive unit 529 comprises, for example, an air cylinder, to give tension to the optical fiber 503 coiled around the looper body 527 and to prevent mis-routing of the optical fiber 503 owing to slack. The looper body 527 is guided by the looper slider 531 in extension/contraction direction. The looper slider 531 comprises rollers as seen in the figure.

At downstream of the optical fiber looper unit 526, there located the feed passage 533 which accepts the optical fiber 503 fed from the optical fiber looper unit 526 to pass therethrough. The feed passage 533 comprises a straight part 535 and a bend part 537. The straight part 535 is fabricated by a stainless steel guide tube.

The bend part 537 is made of a flexible optical fiber guide tube using a coil spring. By combining the straight part 535 and the bend part 537, arbitrary shape of the feed passage 533 is designed.

The belt feeder 545 feeds the optical fiber 503 which was stored in the looper body 527 again. The belt feeder 545 preferably uses a pair of endless belts 547. The endless belts 547 are driven by the drive rollers 549, and the driven rollers 551.

The pair of the endless belts 547 sandwich the optical fiber 503 to feed the optical fiber under sufficient friction force. The optical fiber 503 fed from the belt feeder 545 passes through the bend part 537 and enters the tip guide 550. The tip guide 550 is rotatable around the support point 553, and is rotated by the drive unit 555 to conduct swing motion.

The swing motion feeds the tip of the optical fiber 503 correctly into the jet 513 of hot metal, or molten metal. The belt feeder 545, the tip guide 550, the support point 553, and the drive unit 555 are mounted to the carriage 557 which is movable forward/backward by the drive wheels 559.

The forward/backward motion is enabled by the slide guide 539 and the optical fiber looper unit 526. That is, the slide guide 539 has a double tube structure, where the double tubes 541, 543, structure a straight part 535 overlaid by each other for a long distance along the axial direction. With the configuration, the fixed feed passage 533 is allowed to extend/contract even when the carriage 557 moves forward/backward. The feed of optical fiber is adjusted by the looper unit 526 which extends/contracts synchronously with the forward/backward motion of the carriage 557.

The functions of the embodiment is described below.

The functions consist of the preparation step for storing the optical fiber 503 into the optical fiber looper unit 526, and the feed step for actually feeding the optical fiber 503 into the jet 513 of hot metal as molten metal.

In the preparation step, the pinch rolls 525 are driven to draw the optical fiber 503 and to rotate the bobbin 501 for feeding the optical fiber 503 by a specified length necessary to measure the temperature. At the same time, the looper drive unit 529 moves the looper body 527 to right hand side in the figure and makes the looper body 527 move along the looper slider 531. The fed optical fiber 503 is stored in the extension part of the looper body 527 to prevent mis-routing of the optical fiber 503 owing to slack or other causes. After feeding the optical fiber 503 by a specified length, the brake 521 for the bobbin 501 actuates to stop the rotation of the bobbin 501.

The fed optical fiber 503 is stored by winding around the looper body 527. At that time, the looper drive unit 529 moves the looper body 527 to right hand side of the figure and makes the looper body 527 move along the looper slider 531, thus prevents mis-routing of the optical fiber 503 owing to slack or other causes. During the preparation step, the belt feeder 545 stops, and the optical fiber 503 at downstream of the optical fiber looper unit 526 does not move.

In the feed step, the looper drive unit 529 moves the looper body 527 to left hand side of the figure under a state that the bobbin 501 does not rotate. Thus, the optical fiber looper unit 526 contracts. At the same time, the belt feeder 545 feeds the optical fiber 503 into the hot metal jet 513 at a specified speed. At that moment, the optical fiber 503 at upstream of the looper unit 529 does not move, and the bobbin 501 does not rotate.

In the feed step, during the action to feed the optical fiber 526, which was stored in the optical fiber looper unit 526, into the hot metal jet 513 by a specified length of the fiber, the heat radiation light emitted from the hot metal jet enters from the tip of the optical fiber 503 and passes through the optical fiber 503 to reach a radiation thermometer.

The arrived light is converted into current by the photo/current converter of the radiation thermometer. The current is taken out via a rotary joint of the bobbin 501. Based on the current, the temperature in the hot metal jet 513 is determined and recorded.

As described above, the bobbin 501 does not rotate during the measurement of the temperature in the hot metal jet 513. Therefore, a bad influence of centrifugal force and vibration induced by the rotation of the bobbin 501 on the functioning of photo/current converter is prevented, which influence appears in prior art. In addition, the problem of noise generation on the rotary joint owing to the rotation of bobbin 501 during temperature measurement is also solved.

Fig. 25 shows a result of experiments. The experiments selected the peak value of varying temperature signals as the hot metal temperature. The experiments conducted the temperature measurement for a continuous 10 min. of period, though only several seconds are available in a commercial operation for measuring temperature. The maximum and minimum dispersion of the observed peak values of temperature signals during 10 min. period of observation was about 3 °C (Fig. 25(A)) when the measurement was carried out while rotating the bobbin 501 as in prior art, and was reduced to about 1 ° C (Fig. 25(B)) when the measurement was carried out by stopping the rotation of the bobbin 501.

Consequently, according to the present invention, the temperature measurement is able to conduct while feeding the optical fiber into the molten metal without rotating the bobbin. Therefore, the bobbin does not rotate in a state that the heat radiation light is being converted into current during the temperature measurement operation. As a result, centrifugal force and vibration induced by the rotation of bobbin do not transmit to the photo/current converter, and no bad influence occurs. In addition, there generates no noise on the rotary joint caused by the rotation of the bobbin. Accordingly, the bad influence of centrifugal force and vibration and the occurrence of noise are prevented, thus improving the accuracy of temperature measurement.

### EMBODIMENT 7

Embodiment 7 provides a method for measuring temperature of hot metal at the tapping hole using a consuming thermometer of optical fiber covered with a metallic tube, wherein the optical fiber covered with a metallic tube, which optical fiber is connected with a radiation thermometer, is inserted into an outer cylinder made of metal, and wherein the optical fiber covered with metal tube is immersed into the hot metal at a specified feed speed.

The radiation thermometer is the one commonly used as an optical fiber thermometer to determine the temperature based on the light energy and the light wavelength dispersion sent from the optical fiber. According to the present invention, the optical fiber is covered with a metallic tube, which optical fiber with the metal tubeis then inserted into a metallic outer cylinder having a specified outer diameter and inner diameter.

The optical fiber that is inserted into the outer cylinder is fed into the molten metal without being expelled from the jet of molten metal. When some length of the optical fiber is fed into the molten metal, the outer cylinder and the metal tubeon the optical fiber melt out. When they melt, the jet of the molten metal breaks the base lead of the optical fiber (such as quartz glass), and the broken end becomes the tip of the optical fiber. The light of heat radiation coming from the molten metal in the vicinity of the tip part enters the optical fiber from the tip part, and reaches the radiation thermometer, where the temperature determination is conducted.

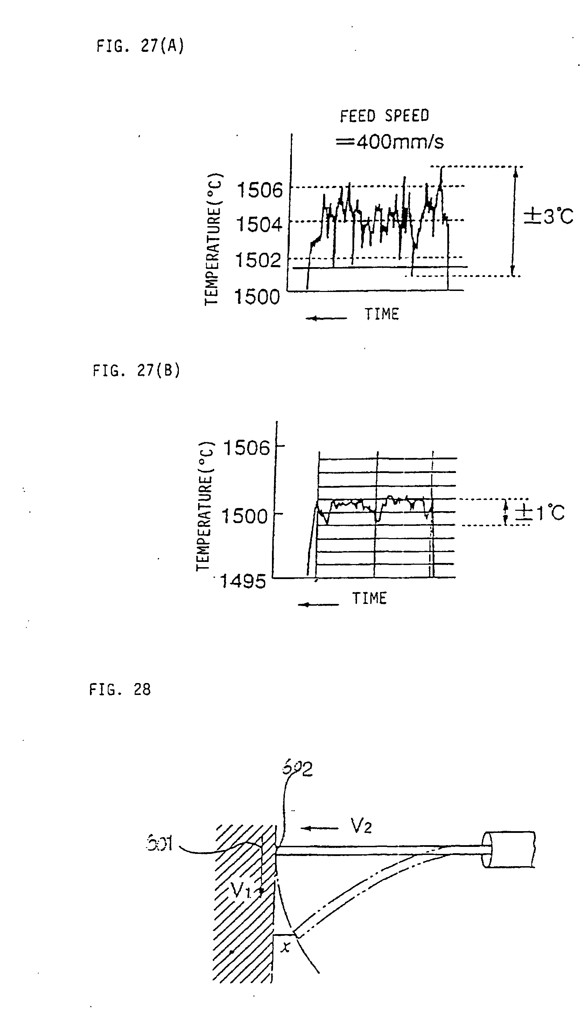

Fig. 28 shows a model sketch of the state that the thermometer of optical fiber covered with metal tube is immersed into the tapping hole where the hot metal ejects. The reference number 601 is the jet of the hot metal at the tapping hole, the number 602 is the tip part of the optical fiber. When the optical fiber covered with metal tubeis fed vertically at a speed of V₂ into the hot metal which flows at a speed of V₁, the optical fiber warps owing to the force applied by the hot metal flow, and the tip of the optical fiber becomes apart from the hot metal by a distance of x. At this moment, the tip of the optical fiber begins to swing, which interferes stable temperature measurement. To immerse the tip of the optical fiber stably into the hot metal flow, the value of x is necessary to be zero or negative.

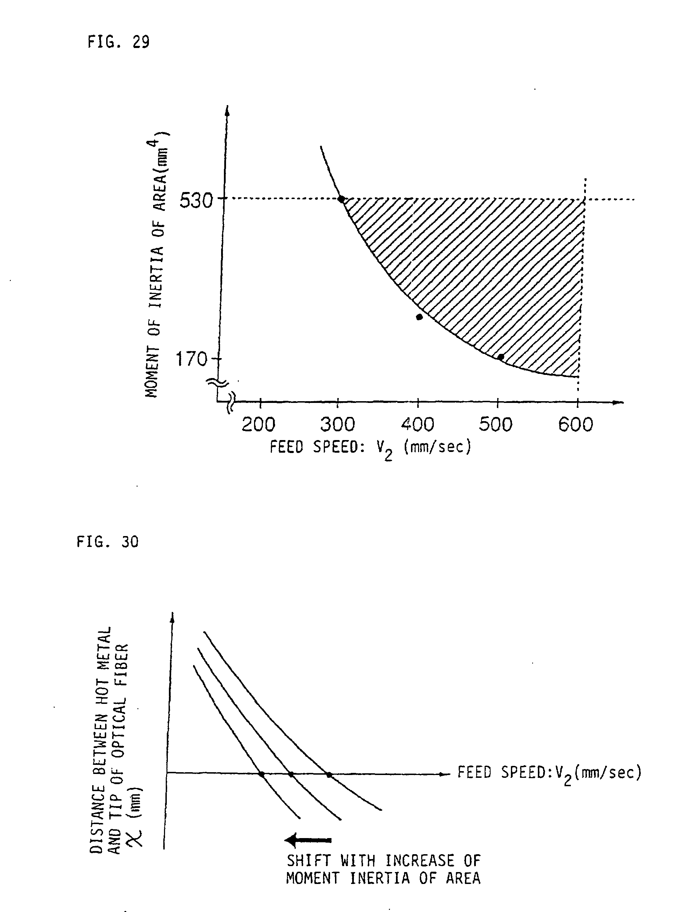

On the other hand, the relation among the linear distance x between the hot metal and the tip of the optical fiber and the feed speed V₂ of the optical fiber is expressed by Fig. 30. The speed at x = 0 is the minimum feed speed necessary to stably immerse the tip of the optical fiber into the hot metal. The minimum feed speed is the speed to overcome the flow of hot metal. When the moment inertia of area of the optical fiber covered with metal tubebecomes large, the minimum feed speed shifts to decreasing side, or left hand side of the figure.

Accordingly, an effective way to make the value of x to zero or negative is to increase the optical fiber feed speed V₂, to increase the moment inertia of area, I, of the optical fiber including the outer cylinder (I = π(D⁴ - d⁴)/64, where D is outer diameter of outer cylinder, and d is inner diameter of outer cylinder), or to combine these two measures. The moment inertia of area, I, increases when the outer cylinder diameter increases, as the definition equation suggests.

According to the present invention, the moment inertia of area is increased by inserting the thermometer of optical fiber covered with a metal tubefurther into a metallic outer cylinder having a specified diameter, and the optical fiber along with the outer cylinder is immersed into the hot metal flow at a specified feed speed. The diameter of the outer cylinder and the feed speed depend on the conditions such as tapping rate of individual blast furnaces. Therefore, an optimum condition is selected by experiment.

The following is the results of measurement at a tapping hole of a blast furnace.

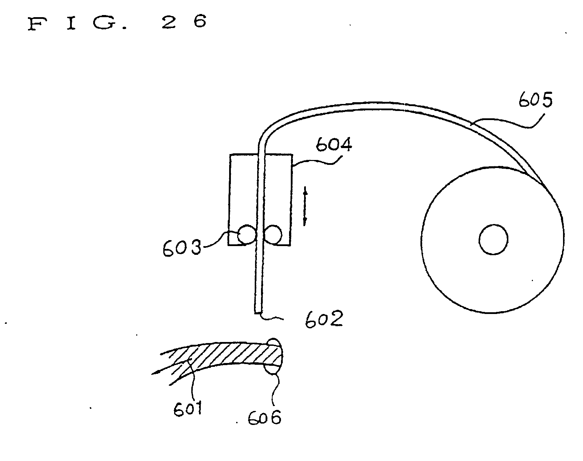

Fig. 26 shows a schematic drawing of apparatus used for the method for measuring according to the present invention. The reference number 601 is the jet of hot metal at the tapping hole, the number 602 is the tip of the optical fiber inserted into the outer cylinder, the number 603 is the measure roll, the number 604 is the lift unit, the number 605 is the optical fiber covered with metal tubeinserted into the outer cylinder, and the number 606 is the tapping hole.

The radiation thermometer uses the one for common optical fiber thermometer. According to the present invention, the optical fiber is covered with a metallic tube, which optical fiber with metal tubeis further inserted into a metallic outer cylinder having a specified outer diameter and inner diameter. The material of the outer cylinder is not specifically limited if only it satisfies the necessary value of moment inertia of area, I. A preferred material for the outer cylinder is SUS 304, for example. According to the embodiment, the necessary value of I is 530 mm⁴ or less because if an outer cylinder having a large diameter is immersed into the hot metal flow, the hot metal scatters into surrounding atmosphere.

The optical fiber thermometer which is inserted into an outer cylinder is fed at a specified speed using the lift unit 604 which is driven by pneumatic pressure and using the feed mechanism comprising the measure roll 603. The feed speed has an upper limit of 600 mm/sec.

Fig. 27 shows a result of temperature measurement under the condition that the optical fiber thermometer was immersed into the ejecting hot metal at the tapping hole at a feed speed of 400 mm/sec. The vertical axis of the graph is the observed temperature, and the horizontal axis is the time of measurement. Fig. 27(A) shows comparative data of temperature measurement when the optical fiber covered with metal tubewas immersed into the hot metal flow without inserting into an outer cylinder. The observed temperatures showed a dispersion of ±3 ° C. Fig. 27(B) shows an example of the present invention giving the temperature measurement under the conditions that a thermometer of optical fiber covered with a metal tubewas inserted into an outer cylinder made of SUS304 having 8 mm of outer diameter and 5 mm of inner diameter (I = 170). The measured temperatures gave an accuracy of ± 1°C, which is a stable state of measurement.

Fig. 29 shows a determined minimum feed speed to give ±1 °C of dispersion of observed temperatures using three kinds of outer cylinders each giving the moment inertia of area of 170, 260, and 530 mm⁴. The vertical axis is the moment inertia of area, I, and the horizontal axis is the feed speed of optical fiber, V₂. The figure indicates a favorable condition of I and V₂ in the embodiment by the shaded area. That is, I is in a range of from 170 to 530 mm⁴, and V2 is in a range of from 300 to 600 mm/sec. Inside of the shaded area, the dispersion of measured temperatures stays within ±1 °C to assure a high accuracy and stable temperature measurement.

The present invention allows to continuously measure the temperature of a hot metal at the tapping hole in a stable state at high accuracy. Accordingly, the present invention realizes prompt and accurate grasping of the heat level in a blast furnace, and is useful for further efficient blast furnace operation including reduction of raw material cost, complete unmanned and full automatic temperature measurement.

## Claims

1. An apparatus for measuring temperature of molten metal comprising:
(a) a radiation thermometer;
(b) a metal tube covered optical fiber (503) which is connected to the radiation thermometer;
(c) a bobbin (501) on which the metal tube covered optical fiber (503) is coiled therearound;
(d) store means (526) for temporarily storing the metal tube covered optical fiber (503) which is sent from the bobbin (501),
(e) feed means (533), (545) for feeding the metal tube covered optical fiber (503) from said store means (526) into the molten metal at a specified speed;
(f) guide means (539) for guiding the fed metal tube covered optical fiber (503), said guide means (539) having a tip part (550) and the guided optical fiber (503) being introduced into the molten metal through the tip part (550) of the guide means (539);
**characterized in that** it further comprises:
(g) transfer means (555), (557) for moving the tip part (550) of the guide means (539) to a position for measuring temperature of the molten metal, said transfer means (555), (557) being attached to the guide means (539).

2. The apparatus of claim 1, further comprising a feed passage between the bobbin and the feed means.

3. The apparatus of claim 2, wherein the feed passage comprises a coil spring and the feed passage has a straight part and a bend part.

4. The apparatus of claim 3, wherein the coil spring comprises an inner coil spring and an outer coil spring which is located at outer periphery of the inner coil spring, the inner coil spring having a wire diameter smaller than that of the outer coil spring.

5. The apparatus of claim 1, wherein the guide means has a bend part comprising a coil spring.

6. The apparatus of claim 5, wherein the coil spring comprises an inner coil spring and an outer coil spring which is located at outer periphery of the inner coil spring, the inner coil spring having a wire diameter smaller than that of the outer coil spring.

7. The apparatus of claim 1, wherein the feed means comprises:
a pair of endless belts made of a resin, the pair of the endless belts being arranged in parallel so that an outer surface of each of the endless belts contacts each other;
a plurality of lateral grooves and of lateral ribs, which are formed on outer face of each endless belt;
a longitudinal groove formed on outer face of each endless belt, the longitudinal groove crossing the plurality of lateral grooves so that the longitudinal groove engages the optical fiber; and
rolls for driving the endless belts.

8. The apparatus of claim 7, wherein the feed means further comprises a press device for pressing the pair of endless belts by each other so that the lateral grooves and the lateral ribs are engaged together for enhancing the engagement of the optical fiber and the endless belts.

9. The apparatus of claim 1, wherein the tip part of the guide means comprises:
an inner cylinder for passing the optical fiber therethrough;
nozzles for blowing a primary coolant into the inner cylinder to induce adiabatic expansion;
a tip opening having a larger diameter than that of the optical fiber for discharging the primary coolant;
a middle cylinder and an outer cylinder arranged concentrically on outer periphery of the inner cylinder, and
a charge opening for charging a coolant into a space between the inner cylinder and the middle cylinder and a space between the middle cylinder and the outer cylinder, and a discharge opening for discharging the coolant.

10. The apparatus of claim 1, wherein the transfer means for moving the tip part of the guide means to a position for measuring temperature comprises:
a guide drive device for driving the tip part;
a laser distance measuring device for measuring a distance from the molten metal jet;
a laser drive device for driving the laser distance measuring device to change a measuring direction;
computing means for computing a center position of the molten metal jet and a distance from the center position of the molten metal jet based on the distance data obtained by the laser distance measuring device; and
a control device for controlling the guide drive device, driving the tip part and adjusting a position to feed the optical fiber into the molten metal jet.

11. The apparatus of claim 1, wherein the store means comprises a looper device, which is located between the bobbin and the feed passage, for storing the optical fiber fed from the bobbin and for feeding the metal tube covered optical fiber to the feed passage.

12. The apparatus of claim 11, wherein the looper device comprises:
a looper body having a shape of circular arc for storing the optical fiber; and
a looper drive device for extending/contracting the looper body to prevent mis-routing of the metal tube covered optical fiber owing to slack.

## Patentansprüche

1. Vorrichtung zum Messen der Temperatur geschmolzenen Metalls, umfassend:
(a) ein Strahlungsthermometer;
(b) eine mit einer Metallschlaufe umhüllte optische Faser (503), die mit dem Strahlungsthermometer verbunden ist;
(c) einen Spulenkörper (501), auf welchen die mit einer Metallschlaufe umhüllte optische Faser (503) aufgewickelt ist;
(d) eine Speichereinrichtung (526) zum temporären Speichern der mit einer Metallschlaufe umhüllten optischen Faser (503), die von dem Spulenkörper (501) geschickt ist;
(e) eine Zufuhreinrichtung (533, 545) zum Zuführen der mit einer Metallschlaufe umhüllten optischen Faser (503) von der Speichereinrichtung (526) in das geschmolzene Metall bei einer spezifischen Geschwindigkeit;
(f) ein Führungseinrichtung (539) zum Führen der mit einer Metallschlaufe umhüllten optischen Faser (503), wobei die Führungseinrichtung (539) einen Spitzenteil (550) besitzt und die geführte optische Faser (503) in das geschmolzene Metall durch den Spitzenteil (550) der Führungseinrichtung (539) eingeführt ist;
**dadurch gekennzeichnet, dass** sie ferner aufweist:
(g) eine Übertragungseinrichtung (555, 557) zum Bewegen des Spitzenteils (550) der Führungseinrichtung (539) in eine Position zum Messen der Temperatur des geschmolzenen Metalls, wobei die Übertragungseinrichtung (555, 557) an der Führungseinrichtung (539) angebracht ist.

2. Vorrichtung nach Anspruch 1, ferner umfassend eine Zufuhrpassage zwischen dem Spulenkörper und der Zufuhreinrichtung.

3. Vorrichtung nach Anspruch 2, worin die Zufuhrpassage eine Schraubenfeder aufweist, und die Zufuhrpassage besitzt einen geraden Teil und einen gebogenen Teil.

4. Vorrichtung nach Anspruch 3, worin die Schraubenfeder eine innere Schraubenfeder und eine äußere Schraubenfeder, die am äußeren Umfang der inneren Schraubenfeder gelegen ist, aufweist, wobei die innere Schraubenfeder einen geringeren Drahtdurchmesser als derjenige der äußeren Schraubenfeder besitzt.

5. Vorrichtung nach Anspruch 1, worin die Führungseinrichtung einen gebogenen Teil besitzt, der eine Schraubenfeder aufweist.

6. Vorrichtung nach Anspruch 5, worin die Schraubenfeder eine innere Schraubenfeder und eine äußere Schraubenfeder, die am äußeren Umfang der inneren Schraubenfeder gelegen ist, aufweist, wobei die innere Schraubenfeder einen geringeren Drahtdurchmesser als derjenige der äußeren Schraubenfeder besitzt.

7. Vorrichtung nach Anspruch 1, worin die Zufuhreinrichtung aufweist:
ein Paar von Endlosriemen, die aus einem Harz hergestellt sind, wobei das Paar von Endlosriemen parallel angeordnet ist, so dass eine äußere Fläche jedes der Endlosriemen einander berührt;
eine Mehrzahl von Quernuten oder von Querrippen, die auf einer äußeren Fläche jedes Endlosriemens gebildet sind;
eine Längsnut, die auf einer äußeren Fläche jedes Endlosriemens gebildet ist, wobei die Längsnut die Mehrzahl von Quernuten kreuzt, so dass die Längsnut die optische Faser betätigt; und
Rollen zum Antreiben der Endlosriemen.

8. Vorrichtung nach Anspruch 7, worin die Zufuhreinrichtung ferner eine Pressvorrichtung zum Pressen des Paars von Endlosriemen miteinander aufweist, so dass die Quernuten und die Querrippen miteinander in Eingriff sind, zur Verbesserung des Eingriffs der optischen Faser und der Endlosriemen.

9. Vorrichtung nach Anspruch 1, worin der Spitzenteil der Führungseinrichtung aufweist:
einen inneren Zylinder zum Hindurchpassieren der optischen Faser;
Düsen zum Blasen eines primären Kühlmittels in den inneren Zylinder, um adiabatische Expansion zu induzieren;
eine Spitzenöffnung, die einen größeren Durchmesser besitzt als die optische Faser, zum Ausstoßen des primären Kühlmittels;
einen mittleren Zylinder und einen äußeren Zylinder, die konzentrisch an dem äußeren Umfang des inneren Zylinders angeordnet sind; und
eine Ladeöffnung zum Laden eines Kühlmittels in einen Raum zwischen dem inneren Zylinder und dem mittleren Zylinder und einen Raum zwischen dem mittleren Zylinder und dem äußeren Zylinder, und eine Ausstoßöffnung zum Ausstoßen des Kühlmittels.

10. Vorrichtung nach Anspruch 1, worin die Übertragungseinrichtung zum Bewegen des Spitzenteils der Führungseinrichtung in eine Position zum Messen der Temperatur aufweist:
eine Führungsantriebsvorrichtung zum Antreiben des Spitzenteils;
eine Laserabstandsmessvorrichtung zum Messen eines Abstands von dem Strahl geschmolzenen Metalls;
eine Laserantriebsvorrichtung zum Antreiben der Laserabstandsmessvorrichtung zum Verändern einer Messrichtung;
eine Berechnungseinrichtung zum Berechnen einer Mittelposition des Strahls geschmolzenen Metalls und eines Abstandes von in der Mittelposition des Strahls geschmolzenen Metalls basierend auf den Abstandsdaten, die durch die Laserabstandsmessvorrichtung erhalten sind; und
eine Regelvorrichtung zum Regeln der Führungsantriebsvorrichtung, zum Antreiben des Spitzenteils und zum Einstellen einer Position zum Zuführen der optischen Faser in den Strahl geschmolzenen Metalls.

11. Vorrichtung nach Anspruch 1, worin die Speichereinrichtung eine Umwalzvorrichtung aufweist, die zwischen dem Spulenkörper und der Zufuhrpassage gelegen ist, zum Speichern der optischen Faser, die von dem Spulenkörper zugeführt ist und zum Zuführen der mit einer Metallschlaufe umhüllten optischen Faser zu der Zufuhrpassage.

12. Vorrichtung nach Anspruch 11, worin die Umwalzvorrichtung aufweist:
einen Umwalzkörper, der die Form eines ringförmigen Bogens besitzt, zum Speichern der optischen Faser; und
eine Umwalzantriebsvorrichtung zum Ausdehnen/Zusammenziehen des Umwalzkörpers, um ein Fehlleiten der mit einer Metallschlaufe umhüllten optischen Faser infolge Spiels zu verhindern.

## Revendications

1. Dispositif pour mesurer la température d'un métal fondu comportant :
(a) un thermomètre à radiation,
(b) une fibre optique revêtue d'un tube métallique (503) qui est reliée au thermomètre à radiation,
(c) une bobine (501) sur laquelle la fibre optique revêtue d'un tube métallique (503) est bobinée,
(d) des moyens de stockage (526) pour stocker temporairement la fibre optique revêtue d'un tube métallique (503) qui est expédiée à partir de la bobine (501),
(e) des moyens d'acheminement (503, 545) pour acheminer la fibre optique revêtue d'un tube métallique (503) à partir desdits moyens de stockage (526) à l'intérieur du métal fondu à une vitesse spécifiée,
(f) des moyens de guidage (539) pour guider la fibre optique revêtue d'un tube métallique acheminée (503), lesdits moyens de guidage (539) ayant une partie d'extrémité (550) et la fibre optique guidée (503) étant introduite dans le métal fondu à travers la partie d'extrémité (550) des moyens de guidage,
**caractérisé en ce qu'**il comporte de plus :
(g) des moyens de transfert (555, 557) pour déplacer la partie d'extrémité (550) des moyens de guidage (539) vers une position de mesure de température du métal fondu, lesdits moyens de transfert (555, 557) étant reliés auxdits moyens de guidage (539).

2. Dispositif selon la revendication 1, comportant de plus un passage d'acheminement entre la bobine et les moyens d'acheminement.

3. Dispositif selon la revendication 2, dans lequel le passage d'acheminement comporte un ressort hélicoïdal et le passage d'acheminement a une partie rectiligne et une partie incurvée.

4. Dispositif selon la revendication 3, dans lequel le ressort hélicoïdal comporte un ressort hélicoïdal intérieur et un ressort hélicoïdal extérieur qui est positionné au niveau de la périphérie extérieure du ressort hélicoïdal intérieur, le ressort hélicoïdal intérieur ayant un diamètre de fil plus petit que celui du ressort hélicoïdal extérieur.

5. Dispositif selon la revendication 1, dans lequel les moyens de guidage ont une partie incurvée comportant un ressort hélicoïdal.

6. Dispositif selon la revendication 5, dans lequel le ressort hélicoïdal comporte un ressort hélicoïdal intérieur et un ressort hélicoïdal extérieur qui est positionné au niveau de la périphérie extérieure du ressort hélicoïdal intérieur, le ressort hélicoïdal intérieur ayant un diamètre de fil plus petit que celui du ressort hélicoïdal extérieur.

7. Dispositif selon la revendication 1, dans lequel les moyens d'acheminement comportent :
une paire de courroies sans fin constituées d'une résine, la paire de courroies sans fin étant agencée en parallèle de sorte qu'une surface extérieure de chacune des courroies sans fin vient en contact avec celle de l'autre,
une pluralité de gorges latérales et de nervures latérales, qui sont formées sur la face extérieure de chaque courroie sans fin,
une gorge longitudinale formée sur la face extérieure de chaque courroie sans fin, la gorge longitudinale recoupant la pluralité de gorges latérales de sorte que la gorge longitudinale vient en prise avec la fibre optique, et
des rouleaux pour entraîner les courroies sans fin.

8. Dispositif selon la revendication 7, dans lequel les moyens d'acheminement comportent de plus un dispositif formant presse pour appuyer la paire de courroies sans fin l'une contre l'autre de sorte que les gorges latérales et les nervures latérales soient en prise ensemble pour renforcer la mise en prise de la fibre optique et des courroies sans fin.

9. Dispositif selon la revendication 1, dans lequel la partie d'extrémité des moyens de guidage comporte :
un cylindre intérieur pour laisser passer la fibre optique à travers celui-ci,
des buses pour souffler un agent de refroidissement principal dans le cylindre intérieur pour induire une dilatation adiabatique,
une ouverture d'extrémité ayant un diamètre plus grand que celui de la fibre optique pour évacuer le produit de refroidissement principal,
un cylindre médian et un cylindre extérieur agencés concentriquement sur la périphérie extérieure du cylindre intérieur, et
une ouverture de charge pour charger un produit de refroidissement dans un espace situé entre le cylindre intérieur et le cylindre médian et un espace situé entre le cylindre médian et le cylindre extérieur, et une ouverture d'évacuation pour évacuer le produit de refroidissement.

10. Dispositif selon la revendication 1, dans lequel les moyens de transfert destinés à déplacer la partie d'extrémité des moyens de guidage vers une position de mesure de température comportent :
un dispositif d'entraînement de guide pour entraîner la partie d'extrémité,
un dispositif de mesure de distance à laser pour mesurer la distance à partir du jet de métal fondu,
un dispositif d'entraînement de laser pour entraîner le dispositif de mesure de distance à laser pour changer une direction de mesure,
des moyens de calcul pour calculer une position centrale du jet de métal fondu et la distance depuis la position centrale du jet de métal fondu sur la base des données de distance obtenues par le dispositif de mesure de distance à laser, et
un dispositif de commande pour commander le dispositif d'entraînement de guide, entraînant la partie d'extrémité et ajustant une position pour acheminer la fibre optique à l'intérieur du jet de métal fondu.

11. Dispositif selon la revendication 1, dans lequel les moyens de stockage comportent un dispositif de mise en boucle, qui est positionné entre la bobine et le passage d'acheminement, pour stocker la fibre optique acheminée à partir de la bobine et pour acheminer la fibre optique revêtue d'un tube métallique vers le passage d'acheminement.

12. Dispositif selon la revendication 11, dans lequel le dispositif de mise en boucle comporte :
un corps de mise en boucle ayant une forme d'arc de cercle pour stocker la fibre optique, et
un dispositif d'entraînement de mise en boucle pour étendre/rétracter le corps de mise en boucle pour empêcher un mauvais acheminement de la fibre optique revêtue d'un tube métallique du fait de l'existence d'un mou.
